# EUROPÄISCHE PATENTSCHRIFT

(11) **EP 2 636 696 B1**
(45) Veröffentlichungstag und Bekanntmachung des Hinweises auf die Patenterteilung: **07.02.2018**
(21) Anmeldenummer: 13158284.3
(22) Anmeldetag: 08.03.2013
(51) Int. Cl.: C08G 65/00

(54) **Modifizierte Alkoxylierungsprodukte, die zumindest eine nicht-terminale Alkoxysilylgruppe aufweisen und mehrere Urethangruppen enthalten und deren Verwendung**
Modified alkoxylation products containing at least one non-terminal alkoxysilyl group and several urethane groups and their use
Produits d'alkoxylation modifiés comportant au moins un groupe alkoxysilyle non terminal et plusieurs groupes uréthane et leur utilisation

(30) Priorität: 09.03.2012 DE 102012203737
(43) Veröffentlichungstag der Anmeldung: 11.09.2013
(73) Patentinhaber: Evonik Degussa GmbH, 45128 Essen (DE)
(72) Erfinder: Ferenz, Michael, Dr., 45147 Essen (DE); Brugger, Bastian Matthias Dr., 46049 Oberhausen (DE); Lobert, Matthias, Dr., 45309 Essen (DE); Zellmer, Volker, Dr., 46240 Bottrop (DE); Schubert, Frank, Dr., 47506 Neukirchen-Vluyn (DE); Knott, Wilfried, Dr., 45355 Essen (DE); Roessing, Melanie, 46119 Oberhausen (DE)

(56) Entgegenhaltungen:
- EP-A1- 2 093 244
- EP-A1- 2 415 797
- WO-A1-2010/136280
- DE-A1-102009 022 630
- US-A1- 2011 021 693

## Beschreibung

Die Erfindung betrifft Alkoxylierungsprodukte, deren Herstellung, Zusammensetzungen enthaltend die erfindungsgemäßen Alkoxylierungsprodukte, sowie deren Verwendung als oder zur Herstellung von Kleb- und Dichtstoffen.

Konventionelle Polyetheralkohole, oft auch kurz einfach als Polyether bezeichnet und vorwiegend aus Propylenoxid und Ethylenoxid aufgebaut, sind seit langem bekannt und werden in großen Mengen technisch hergestellt. Sie dienen unter anderem durch Umsetzung mit Polyisocyanaten als Ausgangsverbindungen zur Herstellung von Polyurethanen oder aber auch zur Herstellung von Tensiden.

Organische Alkoxysilanverbindungen wie 3-Glycidyloxy-propyltrimethoxy- bzw. - triethoxy-silan, die z.B. unter den Handelsnamen DYNASYLAN® GLYMO bzw. DYNASYLAN® GLYEO (Warenzeichen der Evonik Degussa GmbH) erhältlich sind, nehmen Eingang in die Herstellung von organisch modifizierten Netzwerken beim Sol-Gel-Verfahren, das als Schlüsselprozess zur Herstellung von Nanocompositen dient, die Beschichtungssysteme mit verbesserten Eigenschaften im Hinblick auf Härte, Kratz- und Abriebfestigkeit, Temperaturresistenz sowie Lösemittel- und Säurebeständigkeit liefern. Alkoxysilanverbindungen finden des Weiteren vielfältigen Eingang in Dicht- und Klebstoffe sowie generell als reaktive Haftvermittler und Primer für verschiedene Substrate wie Metalle, Glas und Glasfasern/Glasgewebe für faserverstärkte Verbundwerkstoffe und zur Oberflächenbehandlung von z.B. Pigmenten und Füllstoffen in Lacken.

Es hat nicht an Anstrengungen gefehlt, die Eigenschaftsprofile von Alkoxysilanverbindungen durch chemische Modifizierungen zu verbessern, um noch weitere Anwendungsgebiete für diese bedeutsame Produktklasse zu erschließen. So ist aus der Literatur bekannt, das Eigenschaftsprofil von Alkoxylierungsprodukten (Polyethern) mit denen von vernetzbaren, speziell Alkoxysilylgruppen tragenden Verbindungen zu kombinieren. So stellt die DE 69831518 T2 u.a. auf die Modifizierung von Polyetheralkoholen mit z.B. Isocyanatgruppen tragenden Alkoxysilanen unter urethanisierender Verknüpfung ab. Des Weiteren wird zur Alkoxysilyl-Modifizierung auch die hydrosilylierende Anbindung von Alkoxymonohydridosilanen an zuvor mit olefinisch ungesättigten Endgruppen modifizierten Polyetherolen gewählt.

Die Schriften JP 09012863, JP 09012861 und JP 07062222 beanspruchen ein Verfahren zur Herstellung von ausschließlich terminal mit hydrolysierbaren Trialkoxysilylfunktionen ausgerüsteten Polyetherolen, z.B. Glycerinpolyetherolen, die zunächst via DMC-Katalyse hergestellt, dann durch Zugabe von Alkalialkoholat und Allylchlorid in die entsprechenden Allylether und anschließend durch Platinmetall katalysierte Hydrosilylierung zu den Alkoxysilyl-terminierten Zielprodukten umgesetzt werden.

Alle im Stand der Technik beschriebenen Verfahren eignen sich somit nur zur Herstellung von ausschließlich terminal mit Trialkoxysilylgruppen modifizierten Polyoxyalkylenverbindungen und keinesfalls zur einfachen und/oder mehrfachen Modifizierung von Polyetherketten mit Trialkoxyfunktionen auch innerhalb der Sequenz von Oxyalkyleneinheiten.

Nach der E P 2 093 244 konnten erstmals Alkoxysilylgruppen tragende Alkoxylierungsprodukte hergestellt werden, die sich dadurch auszeichnen, dass im Gegensatz zum bis dahin bekannten Stand der Technik die Alkoxysilylgruppen entlang der Polyetherkette blockartig oder statistisch verteilt sind und nicht nur an den Termini der Kette lokalisiert sind. Weiterhin zeichnen sich diese Verbindungen durch eine reaktionsbedingt endständige OH-Gruppe aus.

Aus dem Vorhandensein der OH-Gruppe und den hydrolyseempfindlichen Alkoxysilylgruppen in einem Molekül rührt die intrinsische Reaktivität der Verbindungen und leichte Vernetzbarkeit unter Bildung dreidimensionaler polymerer Netzwerke her. Allerdings haben Versuche auch gezeigt, dass die Reaktivität der OH-Gruppe gegebenenfalls zu hoch liegt.

Die DE 10 2010 038774 beschreibt nichthydroxylierte alkoxysilylgruppenhaltige Polymere bestehend aus Polyetherblöcken und Urethaneinheiten. Die Verfahrensprodukte weisen eine unzureichende Bruchspannung auf.

Aufgabe der vorliegenden ist daher die Bereitstellung von Verbindungen, die nach ihrer Aushärtung eine erhöhte Bruchspannung gegenüber Alkoxysilylgruppenhaltigen Polymeren des Standes der Technik aufweisen.

### Beschreibung der Erfindung

Überraschenderweise wurde gefunden, dass Verbindungen enthaltend die Umsetzungsprodukte mit mehrfach funktionellen Isocyanaten wie nachfolgend definiert diese Aufgabe lösen. Der Gegenstand der vorliegenden Erfindung ist in den anhängenden Ansprüchen 1-15 definiert. Gegenstand der vorliegenden Erfindung sind deshalb Alkoxylierungsprodukte wie in den Ansprüchen beschrieben.

Ein weiterer Gegenstand der vorliegenden Erfindung ist ein Verfahren zur Herstellung von erfindungsgemäßen Alkoxylierungsprodukten, welche dadurch gekennzeichnet ist, dass in einem ersten Umsetzungsschritt (a) Polyether PE mit Diisocyanaten umgesetzt werden und in einem zweiten Reaktionsschritt (b) das Produkt und/oder das Produktgemisch des ersten Umsetzungsschrittes (a) mit einem Molekül der Formel H-M umgesetzt wird. Polyether PE, Diisocyanate und Moleküle der Formel H-M werden nachfolgend definiert.

Ebenfalls Gegenstand der vorliegenden Erfindung sind Zusammensetzungen enthaltend mindestens eines der erfindungsgemäßen Alkoxylierungsprodukte allein oder in Mischungen mit weiteren, gegebenenfalls härtbaren Substanzen.

Ein weiterer Gegenstand der vorliegenden Erfindung ist die Verwendung der erfindungsgemäßen Alkoxylierungsprodukte, sowie der Produkte des erfindungsgemäßen Verfahrens, sowie der erfindungsgemäßen Zusammensetzungen enthaltend die erfindungsgemäßen Alkoxylierungsprodukte.

Ein Vorteil der Erfindung ist, dass die erfindungsgemäßen Alkoxylierungsprodukte, sowie Produkte des erfindungsgemäßen Verfahrens ausgezeichnet lagerstabil sind. Ebenfalls vorteilhaft ist, dass die erfindungsgemäßen Zusammensetzungen enthaltend die erfindungsgemäßen Alkoxylierungsprodukte, sowie Produkte des erfindungsgemäßen Verfahrens nach Zusatz eines Härtungskatalysators unter Wasser- und/oder Feuchtigkeitsausschluss hervorragend lagerstabil sind.

Ein weiterer Vorteil der Erfindung ist, dass die erfindungsgemäßen Alkoxylierungsprodukte, sowie Produkte des erfindungsgemäßen Verfahrens keine toxischen Substanzen emittieren.

Die erfindungsgemäßen Alkoxylierungsprodukte, die Produkte des erfindungsgemäßen Verfahrens, die erfindungsgemäßen Verfahren zur Herstellung der Zusammensetzungen, sowie deren erfindungsgemäße Verwendung, werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend oder vorhergehend Gehaltsangaben (ppm oder %) gemacht, so handelt es sich, wenn nicht anders angegeben, um Angaben in Gewichts-% oder Gewichts-ppm (wppm). Bei Zusammensetzungen beziehen sich die Gehaltsangaben wenn nicht anders angegeben auf die Gesamtzusammensetzung. Werden nachfolgend Mittelwerte angegeben, so handelt es sich, wenn nicht anders angegeben um Zahlenmittel. Werden Molmassen verwendet, handelt es sich, wenn nicht ausdrücklich anders vermerkt um gewichtsmittlere Molmassen Mw mit der Einheit g/mol. Werden nachfolgend Messwerte angegeben, so wurden diese Messwerte, wenn nicht anders angegeben, bei einem Druck von 1013,25 hPa und einer Temperatur von 25°C ermittelt.

Die nachfolgenden Definitionen enthalten mitunter weitere Begriffe, die äquivalent und synonym zu dem definierten Begriff verwendet werden.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen.

Isomere sind dem Fachmann bekannt, in besonderer Weise wird auf die Definitionen von Prof. Kazmaier der Universität des Saarlandes verwiesen, z.B. http://www.unisaarland.de/fak8/kazmaier/PDF_files/vorlesungen/Stereochemie%20Strassb%20Vorla ge.pdf.

Sofern im Umfang dieser Erfindung auf Naturstoffe Bezug genommen wird, z.B. Lactat, sind grundsätzlich alle Isomeren damit gemeint, bevorzugt sind die jeweils in der Natur vorkommenden Isomere, im hier genannten Falle also das L-Lactat.

Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Die verschiedenen Fragmente in den nachfolgenden Formeln (la) und (II) können statistisch verteilt sein. Statistische Verteilungen können blockweise aufgebaut sein mit einer beliebigen Anzahl an Blöcken und einer beliebigen Sequenz oder sie können einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinanderfolgen können. Die Formeln (I), (la) und (II), beschreiben Polymere, die eine Molgewichtsverteilung aufweisen. Daher stellen die Indizes das numerische Mittel über alle Monomereinheiten dar.

Die in den Formeln verwendeten Indexzahlen a, b, c, d, e, f, g, h, i, j, k, l, m, n, o, p, q, r, s, t, u und v sowie die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (la) und (II)

Die hierin beschriebenen Alkoxylierungsprodukte, die die Strukturelemente der Formel (I) enthalten

Mᵢ Dⱼ Tₖ Qₗ URᵤ APᵥ Formel (I)

zeichnen sich dadurch aus, dass die Fragmente M, D, T, Q nicht untereinander, sondern über die Gruppen UR und/oder AP miteinander verknüpft sind, und die Gruppen UR und AP nicht untereinander verknüpft sind, sondern dementsprechend über die Fragmente D, T oder Q miteinander verknüpft sind.

Die Indices sind
i = 2 bis 16, bevorzugt größer 2 bis 12,
j = 1 bis 10, bevorzugt 1,2 bis 8, besonders bevorzugt 1,5 bis 6, insbesondere bevorzugt größer, gleich 2
k = 0 bis 6, bevorzugt größer 0 bis 4, insbesondere 0,5 bis 2,
l = 0 bis 4, bevorzugt größer 0 bis 3, insbesondere 0,5 bis 2,
j + k ist größer gleich 1,5 bevorzugt größer gleich 2,
u = 2 bis 17, bevorzugt größer 2 bis 15, mehr bevorzugt 2,5 bis 10, insbesondere 3 bis 8,
v = 0 bis 6, bevorzugt größer 0 bis 4, insbesondere 0,1 bis 2.

M ist unabhängig voneinander ein Sauerstoffradikal tragender Kohlenwasserstoffrest mit einer minimalen numerischen Molmasse von 88 g/mol, welcher gegebenenfalls substituiert sein kann und / oder durch Heteroatome unterbrochen sein kann, bevorzugt ein Kohlenwasserstoffrest der Formel

CₒH₂ₒ₊₁-O- (CₘH₂ₘ-O)ₙ - (CH₂CH₂-O-)ₚ - (CH₂CH(CH₃)O)ᵣ -,

mit
o = 1 bis 36, beispielsweise auch 5 bis 16 oder 8 bis 11, bevorzugt 2 bis 20, mehr bevorzugt 3 bis 16, insbesondere 4 bis 12,
m = 3 bis 6, n = 0 bis 50, p = 0 - 50,
r = 2 bis 40, bevorzugt 3 bis 30, insbesondere 4 bis 20,
mehr bevorzugt ist der Kohlenwasserstoffrest ein Polyether bestehend aus Butanol gestartetem Polypropylenoxid, insbesondere ist M C₄H₉O[CH₂CH(CH₃)O]_{5,3} - oder M ist ein Rest der Formel (la) 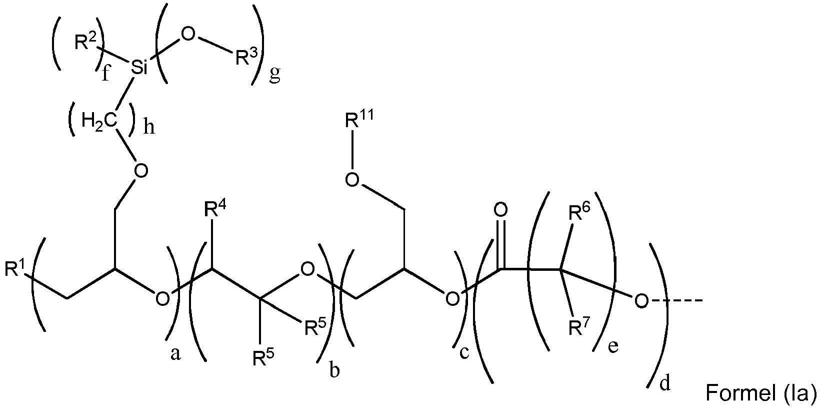 wobei
a = 0 bis 1000 ist, bevorzugt 1 bis 100 oder größer 1 bis 100, besonders bevorzugt 2 bis 50, mit der Maßgabe, dass die Summe der Indices a aus Formel (la) und Formel (II) gleich oder größer 1 sein muss,
b = 0 bis 1000, bevorzugt 1 bis 500, besonders bevorzugt größer 1 bis 400, c = 0 bis 1000, bevorzugt 1 bis 100 oder größer 1 bis 100, besonders bevorzugt 0 bis 50,
d = 0 bis 1000, bevorzugt 1 bis 500 oder größer 1 bis 500, besonders bevorzugt 0 bis 100,
mit der Maßgabe, dass die Gruppen mit den Indices a, b, c und d frei permutierbar über die Molekülkette sind,
e = 1 bis 10,
g + f = 3 und g mindestens gleich 1 ist,
h = 0 bis 10, bevorzugt 1 bis 10, insbesondere bevorzugt 3
und mit der Maßgabe, dass die verschiedenen Monomereinheiten sowohl der Fragmente mit den Indices a, b, c, und d als auch der Polyoxyalkylenkette des Substituenten R¹ untereinander blockweise aufgebaut sein können oder aber einer statistischen Verteilung unterliegen und zudem untereinander frei permutierbar sind, und wobei
R¹ = unabhängig voneinander ein gesättigter oder ungesättigter, linearer oder verzweigter organischer Kohlenwasserstoffrest ist, der substituiert sein kann und als Heteroatome O, S und / oder N enthalten kann,
   bevorzugt enthält der Kohlenwasserstoffrest 4 bis 400 Kohlenstoffatome,
R² = unabhängig voneinander eine Alkylgruppe mit 1 bis 8 Kohlenstoffatomen, insbesondere Methyl- oder Ethyl,
R³ = unabhängig voneinander eine Alkylgruppe mit 1 bis 8 Kohlenstoffatomen, insbesondere Methyl-, Ethyl-, Propyl, Isopropyl-,
R⁴ = unabhängig voneinander ein Wasserstoffradikal oder eine Alkylgruppe mit 1 bis 8 Kohlenstoffatomen,
bevorzugt Wasserstoff, Methyl- oder Ethyl, insbesondere bevorzugt Wasserstoff, R⁵ = unabhängig voneinander ein Wasserstoffradikal, eine Alkylgruppe mit 1 bis 20 Kohlenstoffatomen, eine Aryl- oder Alkarylgruppe,
bevorzugt Wasserstoff, Methyl, Ethyl, Octyl, Decyl, Dodecyl, Phenyl, Benzyl, besonders bevorzugt Wasserstoff, Methyl oder Ethyl,
   oder R⁴ und einer der Reste R⁵ können gemeinsam einen Ring bilden, der die Atome, an die R⁴ und R⁵ gebunden sind, einschließt, bevorzugt enthält dieser Ring 5 bis 8 Kohlenstoffatome,
R⁶ und R⁷ = unabhängig voneinander gleich R⁵ und/oder Alkoxy, bevorzugt Methylgruppen,
R¹¹ = unabhängig voneinander eine gesättigte oder ungesättigte Alkylgruppe mit 1 bis 24 Kohlenstoffatomen, bevorzugt 1 bis 14 Kohlenstoffatomen ist, deren Kette durch Sauerstoff unterbrochen sein kann und weiter funktionelle Gruppen tragen kann wie z.B. Carboxylgruppen ggf mit Alkoholen wie z.B. Methanol, Ethanol, Propanol, Butanol oder Hexanol verestert, Hydroxygruppen ggf. mit Säuren wie Essigsäure, Buttersäure oder (Meth)Acrylsäure bzw. den Polymerisaten der (Meth)Acrylsäure verestert, oder eine Arylgruppe mit 6 bis 20 Kohlenstoffatomen, oder eine Alkarylgruppe mit 7 bis 30, bevorzugt 7 bis 20 Kohlenstoffatomen,
bevorzugt eine Methyl-, Ethyl-, Hexyl-, Octyl-, 2-Ethylhexyl-, Phenyl-, Kresyl-, tert-Butylphenyl- oder Benzylgruppe oder/und eine Allylgruppe oder ein (Poly)(meth)acrylsäureester ist, besonders bevorzugt handelt es sich um eine 2-Ethylhexylgruppe oder eine tert-Butylphenyl- oder Benzylgruppe;

Die Fragmente D, T und Q können auch folgendermaßen beschrieben werden:
D ist ein Polyetherrest PE mit t gleich 2,
T ist ein Polyetherrest PE mit t gleich 3 und
Q ist ein Polyetherrest PE mit t gleich 4.
- PE: ist unabhängig voneinander ein Polyetherrest der Formel -(D^{A})ₜ-D^{X},
wobei t = 2 bis 4, bevorzugt größer 2 bis kleiner 4 und
D^{X} ein t-valenter funktioneller, gesättigter oder ungesättigter, linearer oder verzweigter organischer Kohlenwasserstoffrest ist, der als Heteroatome O, S, Si und / oder N enthalten kann, wobei jeder der Reste D^{A} kovalent an den Rest D^{X} gebunden ist,
bevorzugt enthält der Kohlenwasserstoffrest 8 bis 1500 Kohlenstoffatome,
bevorzugt ist die Kohlenstoffkette des Kohlenwasserstoffrestes durch Sauerstoffatome unterbrochen,
bevorzugt enthält der Kohlenwasserstoffrest Siliziumatom-haltige Substituenten,
bevorzugt sind die Siliziumatom-haltigen Substituenten Alkoxysilylgruppen, bevorzugt ist der von Sauerstoffatomen unterbrochene Kohlenwasserstoffrest ein Polyoxyalkylenrest, Polyetherrest und/oder Polyetheralkoxyrest,
oder D^{X} kann eine einfach oder mehrfach annelierte phenolische Gruppe sein, oder besonders bevorzugt kann D^{X} ein t-valenter Rest von einem t-fach hydroxyliertem Alkohol, Polyetherol, Polyesterol, Siloxan, perfluorierten Polyetherol, (poly)-Urethan oder Saccharid, bevorzugt OH-funktionelle Polyether, Polyester, Polycarbonate, Polyetherester oder perfluorierten Polyether und Mischpolymere daraus, insbesondere bevorzugt OH-funktionelle Polyether oder Polyester, sein.,
und wobei D^{A} ein Fragment der Formel (II) 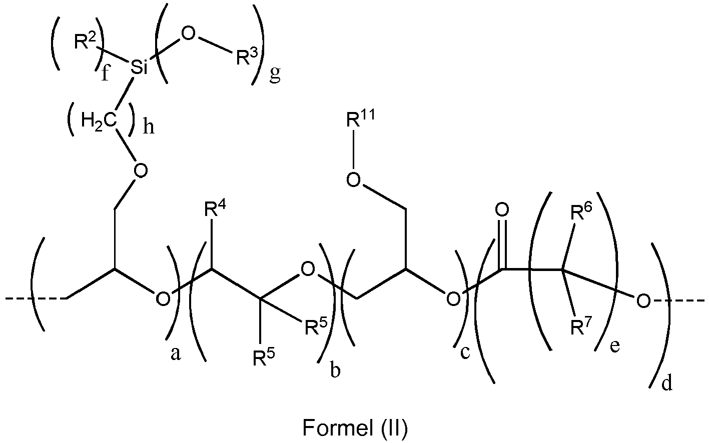 ist, mit b bis h und R² bis R⁷ und R¹¹ definiert wie in Formal (la) und a = 0 bis 1000 ist, bevorzugt 1 bis 100 oder größer 1 bis 100, besonders bevorzugt 2 bis 50, mit der Maßgabe, dass im Falle wenn M keine Substituenten mit Alkoxysilylgruppen trägt oder selbst nicht direkt mit Alkoxysilylgruppen substituiert ist, der Index a gleich oder größer 1 sein muss, Damit können die Polyetherreste D mit einer dihydroxy substituierten Verbindung gestartete Polyether sein. Die Polyetherreste T können ein mit einer trihydroxy substituierten Verbindung gestarteter Polyether sein. Die Polyetherreste Q können mit einer tetrahydroxy substituierten Verbindung gestarteter Polyether sein. Das Fragment M kann ein mit einer monohydroxy substituierten Verbindung gestarteter Polyether sein.
- UR: sind unabhängig voneinander gleiche oder verschiedene divalente Reste der Form -U-D^{C}-U-, wobei U eine -C(O)-NH-Gruppe ist, die über den Stickstoff an D^{C} gebunden ist, wobei D^{C} ein divalenter substituierter oder unsubstituierter Kohlenwasserstoffrest ist, bevorzugt ist D^{C} ein Kohlenwasserstoffrest mit 6 - 30 Kohlenstoffatomen, insbesondere bevorzugt ist D^{C} gleich ein Isophoronrest
- AP: sind unabhängig voneinander gleiche oder verschiedene Reste der allgemeinen Formel (IIIa) oder (IIIb) 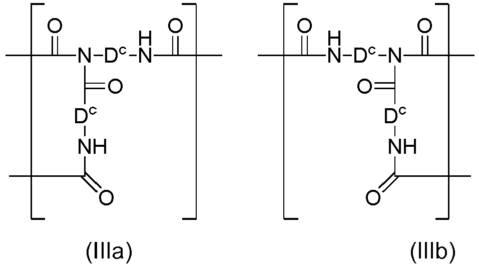
Das Fragment UR kann als Urethanbrücke bezeichnet werden. Das Fragment AP kann als Allophanatbrücke bezeichnet werden.

Der Rest R¹¹ kann weitere funktionelle Gruppen tragen wie z.B. (Meth)Acrylsäure bzw. Polymerisate der (Meth)Acrylsäure. Es können also gegebenenfalls vorhandene Hydroxygruppen mit Acrylsäure oder/und Methacrylsäure verestert sein. Die Doppelbindungen der (Meth)Acrylsäure sind polymerisierbar, z.B. radikalisch z.B. UV induziert.

Die Polymerisation der (Meth)Acrylgruppen kann nach der Herstellung des Polyethers geschehen. Sie kann auch mit den erfindungsgemäßen Alkoxylierungsprodukten, mit den Produkten des erfindungsgemäßen Verfahrens, wie auch nach der erfindungsgemäßen Verwendung durchgeführt werden.

D^{X} ist ein t-valenter funktioneller, organischer Kohlenwasserstoffrest. Die Funktionalität zeichnet sich dadurch aus, dass sie in der Lage ist, eine Polymerisation von Alkylenoxiden unter Ringöffnung, von Säureestern unter Umesterung und/oder von Säurelactonen unter Ringöffnung einzuleiten. Sie stellt in diesem Sinne eine Startverbindung dar. Die Polymerisation kann gegebenenfalls katalytisch erfolgen. Als Katalysatoren können Säuren, Basen und Metallatom haltige Komplexe dienen. Bevorzugt werden sogenannte DMC-Katalysatoren eingesetzt. Dabei gelten die dem Fachmann bekannten gängigen Additionsregeln, beispielsweise dass der Starter bevorzugt an der niedriger substituierten Seite der Alkylenoxide oder an dem Carbonyl-Kohlenstoff der Lactone reagiert. Dies entspricht im Fall der Formel (II) der linken Seite der Formel.

Die OH-Funktionen der Polyether reagieren mit den Isocyanat-Funktionen zu Urethanen. Bei dieser Reaktion treten in der Regel eine Reihe von Nebenreaktionen (z.B. Addition einer Isocyanat-Gruppe an eine Urethan-Einheit zur Allophanat-Gruppe) deren Ausmaß durch die Wahl der Reaktionsbedingungen gesteuert werden kann.

Bevorzugt sind erfindungsgemäße Alkoxylierungsprodukte der Formel (I), in denen die Indices k und l null sind. Besonders bevorzugt sind Alkoxylierungsprodukte/Polymerisate der Polyether PE, die dihydroxyfunktionell sind. Besonders bevorzugt sind divalente Polyether PE, die aus 3-Glycidyloxypropyltriethoxysilan (GLYEO) und Propylenoxid (PO) und optional weiterhin Ethylenoxid (EO) und/oder Glycidylether und/oder Lacton hergestellt wurden. Insbesondere bevorzugt sind dihydroxyfunktionelle Polyether PE, die ausschließlich aus GLYEO und PO oder die ausschließlich aus GLYEO und PO und EO hergestellt wurden. Der Starter D^{X} ist bevorzugt ein Polypropylenglycol.

Besonders bevorzugt sind erfindungsgemäße Alkoxylierungsprodukte der Formel (I), in denen das Fragment M keine Alkoxysilyl- und/oder Alkylsilylgruppen aufweist.

Weiterhin besonders bevorzugt sind erfindungsgemäße Alkoxylierungsprodukte, die bezogen auf das individuelle Molekül, im numerischen Mittel mehr als eine Alkoxysilylgruppe pro Gruppe UR aufweisen.

Weiterhin bevorzugt sind erfindungsgemäße Alkoxylierungsprodukte der Formel (I), in denen k, l, v = null sind. Weiterhin bevorzugt sind Alkoxylierungsprodukte, in denen der Index i gleich 2, der Index j gleich 2 bis 3 und der Index u gleich 3 bis 4 ist.

In der EP 2 093 244 wird beschrieben, dass man Epoxidfunktionen tragende Alkoxysilane in vorteilhafter Weise in Gegenwart bekannter Doppelmetallcyanidkatalysatoren selektiv alkoxylieren kann. Mit dem dort beanspruchten Verfahren erschließt sich die Möglichkeit, in reproduzierbarer Weise die ein- und/oder mehrfache Alkoxysilylgruppen-Modifizierung von Polyoxyalkylenverbindungen nicht nur terminal, sondern auch innerhalb der Sequenz von Oxyalkyleneinheiten vorzunehmen. Die Offenbarung der EP 2 093 244 ist vollumfänglich als Teil und Bestandteil dieser Beschreibung anzusehen.

Bevorzugt sind die erfindungsgemäßen Produkte über ein Alkoxylierungsverfahren unter Verwendung von Doppelmetallcyanidkatalysatoren (DMC-Katalysatoren) erhältlich. Diese Katalysatoren sind in ihrer Herstellung und Verwendung als Alkoxylierungskatalysatoren seit den 1960er Jahren bekannt und werden zum Beispiel in US 3,427,256, US 3,427,334, US 3,427,335, US 3,278,457, US 3,278,458 oder US 3,278,459 dargestellt. Unter den in den Folgejahren weiter entwickelten und z.B. in US 5,470,813 und US 5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyetherolen nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann. Auf die hohe Selektivität der DMC-katalysierten Alkoxylierung ist zurückzuführen, dass zum Beispiel Propylenoxid-basierende Polyether nur sehr geringe Anteile ungesättigter Nebenprodukte enthalten.

Als Referenz sei weiterhin z. B. auf EP-A1-1 017 738, US 5,777,177, EP-A1-0 981 407, WO 2006/002807 und EP-A1-1 474 464 verwiesen.

Einsetzbare Alkylenoxidverbindungen sind z.B. Ethylenoxid, 1,2-Epoxypropan (Propylenoxid), 1,2-Methyl-2-ethoxypropan, Epichlorhydrin, 2,3-epoxy-1-propanol, 1,2-Epoxybutan (Butylenoxid), 2,3-Epoxybutan, 1,2-Methyl-3-ethoxybutan, 1,2-Epoxypentan, 1,2-Methyl-3-ethoxypentan, 1,2-Epoxyhexan, 1,2 Epoxycyclohexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan, 1,2-Epoxycyclohexan, Vinylcyclohexenoxid, (2,3-Epoxypropyl)benzol, Vinyloxiran, 3-Phenoxy-1,2-epoxypropan, 2,3-Epoxymethylether, 2,3-Epoxyethylether, 2,3-Epoxyisopropylether, 2,3-Epoxy-1-propanol, (3,4-Epoxybutyl)stearat, 4,5-Epoxypentylacetat, 2,3-Epoxylpropanmethacrylat, 2,3-Epoxylpropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)propenoxid, 3-(Perfluoroethyl)propenoxid, 3-(Perfluorobutyl)propenoxid, 4-(2,3-Epoxypropy)morpholin, 1-(Oxiran-2-ylmethyl)pyrrolidin-2-on. Bevorzugt eingesetzt werden Ethylenoxid, Propylenoxid und Butylenoxid. Besonders bevorzugt werden Ethylenoxid und Propylenoxid eingesetzt.

Je nach verwendetem epoxidfunktionellem Alkoxysilan und evtl. eingesetzten weiteren Monomeren, können modifizierte Alkoxylierungsprodukte (II) hergestellt werden, sowie beliebig aufgebaute Gemische.

Eine nicht abschließende Sammlung von Epoxidgruppen-substituierten Alkoxysilanen, die allein oder in Mischungen miteinander oder in Kombination mit Epoxidverbindungen im Rahmen der Erfindung verwendet werden können, umfasst zum Beispiel 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropylmethyl-dimethoxysilan, 3-Glycidyloxypropyl-ethyl-diethoxysilan.

Unter den Verbindungen, die den Rest R¹ der Formel (la) liefern, werden im Rahmen der vorliegenden Erfindung Substanzen verstanden, die den Anfang (Start) des herzustellenden Alkoxylierungsprodukts, insbesondere der Formel (la), bilden, das durch die erfindungsgemäße Anlagerung von epoxidfunktionellen Monomeren der und evtl. weiteren Comonomeren erhalten wird. Die in dem erfindungsgemäßen Verfahren eingesetzte Startverbindung ist vorzugsweise ausgewählt aus der Gruppe der Alkohole, Polyetherole oder Phenole. Bevorzugt wird als Startverbindung ein ein- oder mehrwertiger Polyetheralkohol oder Alkohol eingesetzt. Bevorzugt werden ein- bis vierwertige Polyetheralkohol oder Alkohol eingesetzt

Als OH-funktionelle Startverbindungen R¹-H, wobei der Wasserstoff Teil der Hydroxygruppe ist, werden vorzugsweise Verbindungen mit Molmassen von 31 bis 10.000 g/mol, besonders bevorzugt 50 bis 2000 g/mol, insbesondere 60 bis 80 g/mol eingesetzt. Die Startverbindungen können in beliebigen Mischungen miteinander oder als Reinsubstanz eingesetzt werden. Es können auch seitenständig mit Alkoxysilylgruppen enthaltende Substituenten oder direkt mit Alkoxysilylgruppen substituierte Hydroxylverbindungen, wie die in EP 2093244 beschriebenen Silylpolyether als Startverbindungen eingesetzt werden.

Vorteilhaft werden niedermolekulare Polyetherole mit Molmassen von 50 bis 2000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit OH-Funktionen. Hierzu gehören beispielsweise Phenol, Alkyl- und Arylphenole.

OH-funktionelle Startverbindungen R¹-H, die vorteilhaft eingesetzt werden können sind zum Beispiel Allylalkohol, 2-Allyloxyethanol, Vinylalkohol, Ethanol, sowie alle Isomeren des Propanols, Butanols, Pentanols, Hexanols, Heptanols, Octanols und Nonanols. Weiterhin können insbesondere Fettalkohole eingesetzt werden. Typische Beispiele sind Caprinalkohol, 1-Undecanol, Laurylalkohol, 1-Tridecanol, Isotridecylalkohol, Myristylalkohol, 1-Pentadecanol, Cetylalkohol, Palmoleylalkohol, 1-Heptadecanol, Stearylalkohol, Isostearylalkohol, Oleylalkohol, Elaidylalkohol, Petroselinylalkohol, Linolylalkohol, Linolenylalkohol, 1-Nonadecanol, Elaeostearylalkohol, Arachylalkohol, 1-Heneicosanol, Gadoleylalkohol, Behenylalkohol, Erucylalkohol und Brassidylalkohol sowie deren technische Mischungen. Neben der Verbindungsklasse der Oxoalkohole, die meist 2 bis 4 Methylgruppen als Verzweigungen tragen, können auch so genannte Guerbetalkohole, die in 2-Stellung mit einer Alkylgruppe verzweigt sind als Startverbindungen eingesetzt werden. Geeignete Guerbetalkohole sind unter anderem 2-Ethylhexanol, 2-Butyloctanol, 2-Hexyldecanol und/oder 2-Octyldodecanol. Auch cyclische Alkohole Cyclopentanol, 1-Methylcyclopentanol, Cyclohexanol, Furfurylalkohol, und Solketal können als Alkohole eingesetzt werden. Geeignete Alkohole sind auch jegliche mono-OH-terminale Polyether bzw. Polyalkylenoxide wie z. B. Methyl- oder Butyl-gestartete Polyethylen- oder Polypropylenoxide bzw. deren Mischoxide eingesetzt werden. Besonders bevorzugt werden Butanol, 2-Ethylhexanol, Nonanol, iso-Nonanol, 3,5,5-Trimethylhexanol, Decanol und Isotridecylalkohol oder ein Polyether bestehend aus Butanol gestartetem Polypropylenoxid, insbesondere bevorzugt mit R¹ entspricht C₄H₉O[CH₂CH(CH₃)O]ₓ und x = 4 bis 7, besonders bevorzugt mit x = 5,3, eingesetzt.

Als 2 bis 4-fach-OH-funktionelle Startverbindungen, z.B. der Formel D^{X} mit t = 2 bis 4, werden vorzugsweise Verbindungen mit Molmassen von 62 bis 10.000 g/mol, bevorzugt 92 bis 7000 g/mol, besonders bevorzugt 122 bis 5000 g/mol und insbesondere bevorzugt 2000 bis 4000 g/mol eingesetzt. Die Startverbindungen können in beliebigen Mischungen miteinander oder als Reinsubstanz eingesetzt werden. Es können auch seitenständig Alkoxysilylgruppen enthaltende Substituenten oder direkt mit Alkoxysilylgruppen substituierte Hydroxylverbindungen, wie die in EP 2093244 beschriebenen Silylpolyether als Startverbindungen eingesetzt werden.

Vorteilhaft werden niedermolekulare Polyetherole mit Molmassen von 62 bis 2000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit OH-Funktionen. Hierzu gehören beispielsweise Phenol, Alkyl- und Arylphenole oder auch Kohlenhydrate wie z.B. Saccharide, insbesondere eignen sich Bisphenol A und Novolake als Startverbindungen.

Die erfindungsgemäßen Alkoxylierungsprodukte können auf verschiedene Arten und Weisen erhalten werden. Vorzugsweise erfolgt die Herstellung der erfindungsgemäßen Alkoxylierungsprodukte nach dem nachfolgend beschriebenen erfindungsgemäßen Verfahren.

Das erfindungsgemäße Verfahren zur Herstellung der erfindungsgemäßen Alkoxylierungsprodukte zeichnet sich dadurch aus, dass in einem ersten Umsetzungsschritt (a) Polyether der Formel PE mit Diisocyanaten umgesetzt werden und in einem zweiten Umsetzungsschritt (b) das Produkt/Produktgemisch des ersten Umsetzungsschrittes (a) mit einem Moleküle der Formel H-M umgesetzt werden. Die Polyether der Formel PE sind oben beschrieben. Die Moleküle der Formel H-M sind Verbindungen enthaltend Wasserstoff gebunden an das Fragment M, welches oben beschrieben ist.

Bevorzugt werden im erfindungsgemäßen Verfahren die Diisocyanate im molaren Überschuss gegenüber den Polyethern PE eingesetzt.

Weiterhin bevorzugt werden im erfindungsgemäßen Verfahren die Polyether PE so gewählt, dass im Produkt mehr Alkoxysilylgruppen als Guppen UR enthalten sind.

Bevorzugt werden die beiden Umsetzungen (a) und (b) zeitlich voneinander getrennt durchgeführt. Dabei werden bevorzugt zunächst die Polyether PE mit den Diisocyanaten umgesetzt. In diesem Schritt bestimmen die stöchiometrischen Verhältnisse die Anzahl der UR-Fragmente im Produkt. Im zweiten Umsetzungsschritt (b) werden die nicht abreagierten Isocyanatgruppen mit dem Molekül H-M umgestetzt.

Die Umsetzung mit dem Molekül H-M entspricht einem Endcapping-Verfahren. Es wird mit diesem Umsetzungsschritt angestrebt, bevorzugt alle Isocyanatgruppen zur Abreaktion zu bringen.

Im erfindungsgemäßen Verfahren können di-funktionelle Isocyanate ausgewählt aus der Gruppe umfassend beispielsweise; Toluol-2,4-diisocyanat (TDI), Diphenylmethandiisocyanat oder Methylendiphenyldiisocyanat (MDI), Hexamethylendiisocyanat (HMDI), 2,2,4-Trimethylhexan-1,6-diisocyanat (TMDI), Polymeres Diphenylmethandiisocyanat (PMDI), Isophorondiisocyanat (IPDI), 4,4'-Diisocyanatodicyclohexylmethan (H12MDI), wobei die aliphatischen Produkte bevorzugt sind, und Isophorondiisocyanat (IPDI) besonders bevorzugt ist. Trifunktionelle Isocyanate die verwendet werden können sind ausgewählt aus der Gruppe umfassend beispielsweise; Triphenylmethantriisocyanat, 1,3,5-Benzoltriisocyanat und 2,4,6-Toluoltriisocyanat verwendet werden.

Einige dieser Isocyanate weisen Stereozentren auf. Insbesondere wird auf die Isomere des Isophorons hingewiesen. Ausdrücklich sind alle denkbaren Isomere im Umfang dieser Erfindung eingeschlossen. So kann beispielsweise Isophorondiisocyanat in ein cis- und ein trans-Isomer unterschieden werden. Besonders bevorzugt ist Isophorondiisocyanat aus einem cis/trans Gemisch von 5:1 bis 1:5, bevorzugt 3:1 bis 1:3, weiter bevorzugt 1:1. Ein besonders bevorzugtes, kommerzielles Produkt besteht aus einem cis/trans Gemisch von 3:1. Der Einsatz von kommerziellem Isophorondiisocyanat ist bevorzugt. Isophorondiisocyanat ist unter anderen Bezeichnungen erhältlich, welche als Synonyma im Umfang dieser Erfindung eingeschlossen sind: 3-Isocyanatmethyl-3,5,5-trimethylcyclohexylisocyanat, 5-Isocyanato-1-(isocyanatomethyl)-1,3,3-trimethylcyclohexane, CA RN: 4098-71-9. Es sind diverse Handelsnamen üblich, häufig enthalten sie den Namen des Stammmoleküls Isophoron, es sind jedoch auch andere Handelsnamen geläufig: z.B. Desmodur®I (BAYER), Isocur IPDI 22-200 (ISO-ELEKTRA), VESTANAT® IPDI (EVONIK INDUSTRIES), welche ebenfalls im Umfang der vorliegenden Erfindung eingeschlossen sind. Übliche Spezifikationen für Isophorondiisocyanat sind:

Gesamtchlorgehalt <400 mg/kg, hydrolysierbares Chlor <200 mg/kg, Reinheit >99,5 Gew.-%, Brechungsindex n²⁵_{D} 1,483 (DIN 51 423, Teil 2), NCO-Gehalt 37,5 - 37,8 Gew.-% (EN ISO 11 909 / ASTM D 2572), das kommerzielle Produkt wird als farblos bis leicht gelb beschrieben.

Isocyanate können oligomerisieren. Häufig enthalten kommerzielle Produkte mehr oder minder große Mengen derartiger Oligomerer. Diese können z.B. durch die folgenden Formeln beschrieben werden:

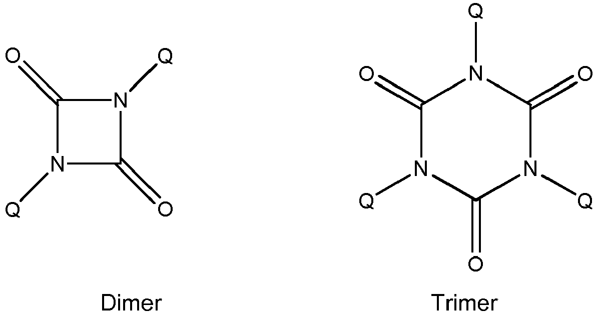

Q bezeichnet den Rest des Isocyanates. Dem Fachmann ist es möglich aus den oben genannten Isocyanaten die hier gemeinten Strukturen abzuleiten. Die Dimere und Trimere sind als homo-Dimere bzw. homo-Trimere zu verstehen.

Im Falle der oben genannten Diisocyanate könnten hier Strukturen entstehen, die in der Lage sind als analoge Brückenelemente zu UR entsprechende Urethane zu enthalten, die direkt aus den gezeigten Dimeren Diisocyanaten ableitbar sind.

Die Trimeren Diisocyanate sind gegebenenfalls in der Lage mit mehr als zwei Polyethern PE zu reagieren. In diesem Falle könnten sich analoge Brückenelemente zu AP bilden, diese Triurethane sind in gleicher Weise ableitbar aus der oben gezeigten Struktur.

Zur Umsetzung der Moleküle H-M und Polyether PE mit Diisocyanaten kann es erforderlich sein, die Reaktion durch Katalyse zu beschleunigen. Als Katalysatoren sind die dem Fachmann aus der Urethan-Chemie hinlänglich bekannten Zinn-, Wismut- und Titan-Katalysatoren, wie Dibutylzinnlaurat, Dioctylzinndiketonat, Dibutylzinndilaurat, Dioctylzinndilaurat, beispielsweise erhältlich unter dem Handelsnamen TIB KAT® 216 (Goldschmidt TIB / TIB Chemicals) Dibutylzinndiacetylacetonat, Dibutylzinndiacetat, Dibutylzinndioctoat, oder Dioctylzinndiacetylacetonat, Borchi®-Katalysatoren, Wismutoxide, Wismutcarboxylat beispielsweise erhältlich unter dem Handelsnamen TIB KAT® 722 (Goldschmidt TIB / TIB Chemicals), Wismutmethansulfonat, Wismutnitrat, Wismutchlorid, Triphenyl-Wismut, Wismutsulfid, sowie Zubereitungen mit diesen Katalysatoren, Titanate, z.B. Titan(IV)isopropylat, Eisen(III)-Verbindungen, z.B. Eisen(III)-acetylacetonat, Aluminiumverbindungen, wie Aluminiumtriisopropylat, Aluminiumtri-sec-butylat und andere Alkoholate sowie Aluminiumacetylacetonat verwandt werden.

Des Weiteren eignen sich auch Zinksalze, wie Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat. Bevorzugt ist die Verwendung von Zinkoctoat (Zink-2-ethylhexanoat), Dioctylzinndilaurat, Wismutoxiden, Wismutcarboxylat, Wismutkatalysator-Zubereitungen und/oder der Tetraalkylammoniumverbindungen, besonders bevorzugt diejenige von Zinkoctoat, Dioctylzinndilaurat und/oder Wismutcarboxylat, sowie Zubereitungen mit WismutKatalysatoren.

Der Katalysator wird bevorzugt in Konzentrationen von 5 - 5000 ppm eingesetzt. Die Einsatzmenge des Katalysators kann die Zusammensetzung des Endproduktes erheblich beeinflussen. Daher kann es sinnvoll sein für verschiedene Katalysatoren unterschiedliche Einsatzkonzentrationen zu wählen. Zum Beispiel können Organozinn-Katalysatoren bevorzugt in Konzentrationen von 5 - 150 ppm und Wismut-Carboxylate bevorzugt in Konzentrationen von 300 - 2000 ppm eingesetzt werden.

Erfindungsgemäße Alkoxylierungsprodukte können bevorzugt durch jedes Verfahren hergestellt/erhalten werden, das geeignet ist, erfindungsgemäße Alkoxylierungsprodukte zu erzielen. Besonders bevorzugt sind solche erfindungsgemäßen Alkoxylierungsprodukte, welche durch nachfolgend beschriebene Verfahren herstellbar/erhältlich sind bzw. hergestellt/erhalten werden.

Ein weiterer Gegenstand der vorliegenden Erfindung sind daher Verfahren, bevorzugt zur Herstellung von Alkoxylierungsprodukten. Nachstehend beschriebene Verfahren eignen sich besonders gut zur Herstellung erfindungsgemäßer Alkoxylierungsprodukte im allgemeinen als auch insbesondere zur Herstellung erfindungsgemäßer Alkoxylierungsprodukte umfassend die beschriebenen bevorzugten Ausführungsformen der erfindungsgemäßen Alkoxylierungsprodukte.

Das beanspruchte Verfahren, zur Herstellung der finalen Alkoxylkierungsprodukte kann aus einer zweistufigen Reaktionsabfolge bestehen, wobei bevorzugt in einem ersten Umsetzungsschritt (a) Polyether der Formel PE mit Diisocyanaten (wie zuvor definiert) umgesetzt werden und in einem zweiten Umsetzungsschritt (b) das Produkt des ersten Umsetzungsschrittes (a) mit einem Molekül der Formel H-M umgesetzt werden.

In bevorzugten erfindungsgemäßen Verfahren zur Herstellung von Alkoxylierungsprodukten können die Polyether PE und die Diisocyanate bevorzugt in Gegenwart eines Katalysators reagieren. Bevorzugt können Disocyanate im molaren Überschuss gegenüber den Polyethern PE eingesetzt werden.

Bevorzugt werden im erfindungsgemäßen Verfahren im Umsetzungsschritt (a) Polyether PE und Diisocyanate miteinander gemischt. Bevorzugt können die Diisocyanate zu den Polyethern PE gegeben werden. Bevorzugt können die Diisocyanate zu erwärmten Polyethern PE gegeben werden. Die Mischung wird bevorzugtermaßen bei erhöhter Temperatur, umfassend Temperaturen größer 25°C vorgenommen, besonders bevorzugt bei Temperaturen von 40°C bis 100°C, insbesondere bevorzugt bei 60°C bis 80°C. Bevorzugt kann die Reaktion in Gegenwart eines Katalysators, insbesondere bevorzugt in Konzentrationen von 5 - 5000 ppm, stattfinden. Weiterhin bevorzugt kann es sein, dass der Katalysator bei der Mischungstemperatur, umfassend Temperaturen größer 25°C, besonders bevorzugt bei Temperaturen von 40°C bis 100°C, insbesondere bevorzugt bei 60°C bis 80°C, zugegeben wird. Bevorzugt wird die Mischung umfassend Diisocyanate und Polyether PE so wie bevorzugt Katalysator vor und/oder während und/oder nach der Zugabe einzelner Komponenten gerührt. Unter Rühren im Sinne dieser Erfindung wird jede Art des Durchmischens eines Reaktionsgemisches verstanden. Bevorzugt kann das Rühren bei erhöhter Temperatur, umfassend Temperaturen größer 25°C, besonders bevorzugt bei Temperaturen von 40°C bis 100°C, bei 60°C bis 80°C, stattfinden. Bevorzugt wird während der gesamten Reaktionszeit gerührt. Insbesondere bevorzugt kann die Mischung 15 min bis 90 min, besonders bevorzugt 30 min bis 60 min, insbesondere 45 min, bevorzugt bei der Mischungstemperatur gerührt werden. Gewünschtenfalls können dem der Reaktionsmischung als besonders bevorzugte Komponenten weiterhin Katalysator, insbesondere bevorzugt in Konzentrationen von 5 - 5000 ppm bezogen auf die Gesamtkonzentration aller Katalysatoren im Reaktionsgemisch, und/oder Diisocyanate und/oder Polyether PE
Bevorzugt kann die Mischung anschließend weiter, oder falls vorher keine Erwärmung stattgefunden hat erstmalig, erwärmt werden. Besonders bevorzugt kann die Mischung um 5°C bis 30°C, besonders bevorzugt um 7°C bis 20°C, besonders bevorzugt um 10°C bis 15°C erwärmt. Bevorzugt kann die Reaktionsmischung auf 60 bis 100°C, insbesondere bevorzugt auf 60 bis 80°C, erwärmt werden. Insbesondere bevorzugt kann es sein, dass die Mischungstemperatur bei 70°C - 80 °C liegen kann und diese Temperatur für nachfolgende Verfahrensschritte beibehalten werden kann.
Bevorzugt wird zur Reaktionsmischung im Umsetzungsschritt (b) weiterhin das Molekül H-M zugegeben. Bevorzugt kann eine gewisse Menge des Moleküls H-M bei der erhöhten Temperatur zugegeben werden. Bevorzugt kann das Molekül H-M bei 60 bis 80°C, insbesondere bevorzugt bei 65 bis 75°C, zugegeben werden. Bevorzugt kann während und/oder nach der Zugabe des Moleküls H-M (weiterhin) gerührt werden. Bei besonderen Ausführungsformen kann es von Vorteil sein, wenn eine weitere Katalysatorzugabe vor oder während der Umsetzung mit H-M erfolgt. Bei dieser erneuten Katalysatorzugabe kann sowohl der gleiche Katalysator, der im ersten Reaktionsschritt zugesetzt wurde, als auch ein anderer Katalysator zugegeben werden. Bevorzugt kann die Mischung einige Stunden, bevorzugt 1 bis 8 Stunden, besonders bevorzugt 1,5 bis 4 Stunden, insbesondere 3 Stunden, bevorzugt bei der erhöhten Temperatur, gerührt werden. Die Schritte des Verfahrens können in beliebiger Reihenfolge durchgeführt werden. In einer besonders bevorzugten Ausführungsform erfolgt die Reihenfolge der Verfahrensschritte in der vorab aufgeführten Reihenfolge ihrer Beschreibung.

Anschließend können die Reaktionsprodukte, vorzugsweise auf Raumtemperatur, abgekühlt werden.
Es ist aber auch möglich dem Reaktionsgemisch noch weitere Komponenten wie Katalysatoren, PE und Diisocyanate, sowie ggf. Verbindungen H-M zuzuführen und die Reaktion fortzuführen. Im Zuge dessen ist es beispielsweise möglich weiterhin einen oder mehrere Katalysatoren zuzusetzen, der dem/den zuvor in Umsetzungsschritten (a) und (b) eingesetzten Katalysator(en) gleich oder verschieden sein kann. Zudem ist es beispielsweise möglich, weiterhin ein oder mehrere Verbindungen der Formel H-M zuzusetzen, die gleich oder verschieden zu der/den zuvor dosierten Verbindung(en) H-M sein können. Ebenso ist es beispielsweise möglich weiterhin ein oder mehrere Diisocyanate zuzusetzen, die dem/den zuvor in Umsetzungsschritten (a) eingesetzten Diisocyanat(en) gleich oder verschieden sein kann.

Als besonders bevorzugte Komponenten können der Reaktionsmischung Katalysator, insbesondere bevorzugt in Konzentrationen von 5 - 5000 ppm bezogen auf die Gesamtkonzentration aller Katalysatoren im Reaktionsgemisch, und/oder Diisocyanate und/oder Polyether PE, bevorzugt nur Katalysator, zugegeben werden. Die Komponenten können gleichzeitig oder nacheinander und/oder auch portionsweise, bevorzugt in 2 bis 12 Portionen, der Reaktionsmischung zugeführt werden. In einer bevorzugten Ausführungsform können Katalysator und mindestens eine weitere Komponente ausgewählt aus Diisocyanate und/oder Polyether PE abwechselnd der Reaktionsmischung zugeführt werden, wobei die Gesamtmenge der einzelnen Komponenten jeweils in 2 bis 12 Portionen unterteilt werden kann und gegebenenfalls abwechselnd je eine Portion der gewählten Komponenten der Reaktionsmischung zugeführt wird. Wenn der Reaktionsmischung Katalysator zugeführt wird, kann es bevorzugt sein, denselben Katalysator wie gegebenenfalls im vorangegangenen Reaktionsschritt, bevorzugt portionsweise, zuzugeben oder aber einen oder mehrere von dem gegebenenfalls ersten Katalysator verschiedenen, weiteren Katalysatoren, bevorzugt portionsweise, zuzugeben. Bevorzugt kann die Zugabe weiterer Komponenten bei erhöhter Temperatur, umfassend Temperaturen größer 25°C, besonders bevorzugt bei Temperaturen von 40°C bis 100°C, bei 60°C bis 80°C, und ganz besonders bevorzugt bei gleichbleibender Temperatur, umfassend Temperaturveränderungen von 5°C mehr oder weniger, wie im vorangegangenen Schritt, erfolgen. Bevorzugt wird die Reaktionsmischung vor und/oder während und/oder nach der Zugabe weiterer Komponenten, insbesondere bevorzugt Katalysator und/oder Diisocyanate und/oder Polyether PE, gerührt. Bevorzugt kann die Mischung einige Stunden, besonders bevorzugt 1 bis 8 Stunden, insbesondere 1,5 bis 4 Stunden, gerührt werden. Gewünschtenfalls kann die Zugabe von weiteren Komponenten, bevorzugt von Katalysator, unter den voranstehend angegebenen Temperaturbereichen und gegebenenfalls den angeführten Rührbedingungen einmal oder mehrmals, also zweimal, dreimal, viermal usw., also beliebig oft, besonders bevorzugt einmal, durchgeführt werden.

Erfindungsgemäß ganz besonders bevorzugt sind solche Verfahren, die in Gegenwart eines Katalysators, insbesondere bevorzugt in Konzentrationen von 5 - 5000 ppm, stattfinden und in denen als weitere Komponente mindestens ein weiteres Mal Katalysator, bevorzugt portionsweise, insbesondere bevorzugt in Konzentrationen von 5 - 5000 ppm bezogen auf die Gesamtkonzentration aller Katalysatoren im Reaktionsgemisch, zugesetzt wird.

Diese erfindungsgemäßen Alkoxylierungprodukte stellen auf Grund ihrer hydrolyseempfindlichen und zur Vernetzung neigenden Alkoxysilylgruppen härtbare modifizierte Polymere oder Oligomere dar. Die Vernetzung zu festen duroplastischen, oder abhängig von der Wahl der Vernetzungsdichte oder bestimmten Zuschlagstoffen auch elastomeren oder thermoplastischen Endprodukten erfolgt auf einfache Weise in Gegenwart von Wasser und wahlweise unter Zusatz eines Katalysators. Dieser Katalysator kann zum Beispiel eine Säure oder Base oder auch eine metallhaltige Verbindung sein. Durch Variation, beispielsweise Erhöhung der Temperatur während des Härtungsvorgangs kann die Topfzeit gesteuert, beispielsweise verkürzt werden. So lässt sich beispielsweise durch eine Variation des Anteils an Alkoxysilan-Einheiten in der modifizierten Polymerkette die Vernetzungsdichte und damit das mechanische und physiko-chemische Eigenschaftsprofil der ausgehärteten modifizierten Polymere in weiten Grenzen beeinflussen.

Die erfindungsgemäßen Zusammensetzungen enthalten neben dem erfindungsgemäßen Alkoxylierungsprodukt und/oder dem Produkt des erfindungsgemäßen Verfahrens der Formel (I) bevorzugt weitere Zusatzstoffe ausgewählt aus der Gruppe der Weichmacher, Füllstoffe, Lösungsmittel, Emulgatoren, Haftvermittler, Additive zur Anpassung des Fließverhaltens, sogenannten Rheologieadditiven und zumindest einem Härtungskatalysator. Bei Bedarf können außerdem Additive zur chemischen Trocknung, und/oder Stabilisatoren gegen thermische und/oder chemische Belastungen und/oder Belastungen durch ultraviolettes und sichtbares Licht in die Formulierung eingebracht werden.

Des Weiteren können die Zusammensetzungen auch an sich bekannte funktionelle Stoffe wie rheologische Additive, Wasserfänger, Thixotropiermittel, Flammschutzmittel, Treibmittel oder Entschäumer, Entlüfter, filmbildende Polymere, antimikrobielle und konservierende Stoffe, Antioxidantien, Farbstoffe, Färbemittel und Pigmente, Frostschutzmittel, Fungizide, Haftvermittler und/oder Reaktivverdünner sowie Weichmacher und Komplexbildner, Sprühhilfsmittel, Netzmittel, Vitamine, Wuchsstoffe, Hormone, pharmakologische Wirkstoffe, Duftstoffe, Lichtschutzmittel, Radikalfänger, UV-Absorber und/oder weitere Stabilisatoren enthalten.

Die erfindungsgemäßen Alkoxylierungsprodukte und die Produkte des erfindungsgemäßen Verfahrens können alleine oder in Abmischung mit einem nach EP 2 093 244 hergestellten Alkoxylierungsprodukt verwendet werden. Bevorzugt beträgt der Anteil der erfindungsgemäßen Alkoxylierungsprodukte und/oder der Produkte des erfindungsgemäßen Verfahrens an Mischungen, die Alkoxylierungsprodukte entsprechend nach EP 2 093 244 hergestellten Alkoxylierungsprodukten enthalten, mehr als 25 Gew.-%, bevorzugt mehr als 50 Gew.-% und besonders bevorzugt mehr als 75 Gew.-% bezogen auf die Gesamtmasse der Alkoxylierungsprodukte.

Die Weichmacher werden ausgewählt aus der Gruppe der Phthalate, der Polyester, Alkylsulfonsäureester des Phenols, Cyclohexandicarbonsäureester oder auch der Polyether, wobei ihr Anteil an der Formulierung 0 Gew.-% bis 90 Gew.-%, bevorzugt 2 Gew.-% bis 70 Gew.-%, besonders bevorzugt 5 Gew.-% bis 35 Gew.-% betragen kann.

Als Füllstoffe können gefällte oder gemahlene Kreide, gefällte oder gemahlene Silikate, gefällte oder pyrogene Kieselsäuren, Glaspulvern, Glaskugeln, Glashohlkugeln (sog. Bubbles), Metalloxiden, wie z.B. TiO₂, Al₂O₃, Metallhydroxide, wie z.B. Aluminiumhydroxid, Holzmehl, natürliche oder gefällte Bariumsulfate verstärkende Fasern, wie z.B. Glasfasern oder Kohlefasern, lang oder kurzfaserige Wollastonite, Kork, Ruß oder Graphit eingesetzt werden. Die Füllstoffe werden bevorzugt in einer Konzentration von 0 bis 90 Gew.-% bezogen auf die fertige Mischung eingesetzt, wobei Konzentrationen von 5 bis 70 Gew.-% besonders bevorzugt sind. Es ist ferner vorteilhaft hydrophobierte Füllstoffe einzusetzen, da diese Produkte einen geringeren Wassereintrag aufweisen und die Lagerstabilität der Formulierungen verbessern. Viele der genannten Füllstoffe lassen sich entweder nachträglich hydrophobieren oder können durch eine geschickte Prozessführung hydrophobiert hergestellt, oder sogar durch die erfindungsgemäßen Alkoxylierungsprodukte hydrophobiert werden. Die Methoden der Hydrophobierung sind vielfältig und dem Fachmann bekannt.

Die Mischungen können organische Substanzen, bevorzugt Flüssigkeiten und Lösungsmittel enthalten. Die Lösungsmittel dienen dabei beispielsweise der Erniedrigung der Viskosität der unvernetzten Mischungen und begünstigen das Aufziehen auf die Partikeloberfläche. Als Lösungsmittel kommen prinzipiell sämtliche Lösungsmittel sowie Lösemittelmischungen in Betracht. Bevorzugte Beispiele für solche Lösungsmittel sind Ether wie z.B. t-Butyl-methylether, Ester, wie z.B. Ethylacetat oder Butylacetat oder Diethylcarbonat sowie Alkohole, wie z.B. Methanol, Ethanol sowie die verschiedenen Regioisomere des Propanols und Butanols oder auch anwendungsspezifisch ausgewählte Glykoltypen. Weiterhin können aromatische und/oder aliphatische Lösemittel wie auch halogenierte Lösemittel, wie z.B. Dichlormethan, Chloroform, Tetrachlormethan, Fluorkohlenwasserstoffe (FREON) u.a.m zum Einsatz kommen, aber auch anorganische Lösemittel wie beispielsweise Wasser, CS₂, überkritisches CO₂ u.a.m..

Die Rheologieadditive können aus der Gruppe der Amidwachse, zu beziehen z.B. von Cray Valley unter dem Markennamen Crayvallac®, gehärtete Pflanzenöle und Fette, pyrogene Kieselsäuren, wie z.B. Aerosil® R202 oder R805 (beide zu beziehen von Evonik) oder Cab-O-Sil® TS 720 oder TS 620 oder TS 630 (vertrieben von Cabot) ausgewählt werden. Je nach gewünschtem Fließverhalten werden diese Additive in mit einem Anteil von 0 Gew.-% bis 10 Gew.-%, bevorzugt mit einem Anteil von 2 Gew.-% bis 5 Gew.-% an der Gesamtformulierung eingesetzt. Als chemische Trocknungsmittel kann Vinyltrimethoxysilan (Dynasylan® VTMO, Evonik oder Geniosil® XL 10, Wacker AG), Vinyltriethoxysilan (Dynasylan® VTEO, Evonik oder Geniosil® GF 56, Wacker), Vinyltriacetoxysilan (Geniosil® GF 62, Wacker), N-Trimethoxysilylmethyl-O-methylcarbamat (Geniosil® XL 63, Wacker) N-Dimethoxy(methyl)silylmethyl-O-methyl-carbamat, N-Methyl[3-(Trimethoxysilyl)-propyl]carbamat (Geniosil® GF 60, Wacker), Vinyldimethoxymethylsilan (Geniosil® XL 12, Wacker), Vinyltris(2-methoxyethoxy)silan (Geniosil® GF 58, Wacker) Bis(3-triethoxysilylpropyl)amin (Dynasylan® 1122, Evonik), Bis(3-trimethoxysilylpropyl)amin (Dynasylan® 1124), N-Dimethoxy(methyl)silylmethyl-O-methyl-carbamat (Geniosil® XL 65, Wacker) oder oligomere Vinylsilane wie beispielsweise Dynasylan® 6490 und Dynasylan® 6498 (beide zu beziehen von Evonik) alleine oder in Mischung verwandt werden. Die Einsatzkonzentration richtet sich nach dem Stabilisierungsgrad und der Effektivität des Trocknungsmittels, bevorzugt mit einem Anteil an der Gesamtformulierung von 0 bis 5 Gew.-% besonders bevorzugt mit einem Anteil von 0,2 bis 3 Gew.-%. Ferner kann zusätzlich oder alternativ zur chemischen Trocknung ein physikalisches Trocknungsmittel, wie z.B. Zeolithe, Molsiebe, wasserfreies Natriumsulfat oder wasserfreies Magnesiumsulfat verwendet werden. Als Haftvermittler werden die dem Fachmann bekannten Substanzen, vornehmlich Alkoxysilyl-Gruppen tragende Verbindungen die zusätzlich über primäre oder sekundäre Amingruppen, Vinylgruppen, Thiolgruppen, Arylgruppen oder alternativ Oxirangruppen verfügen, wie 3-Aminopropyltrimethoxysilan (Dynasylan® AMMO (Evonik), N-(2-Aminoethyl)-3-aminopropyltrimethoxysilan (Dynasylan® DAMO (Evonik)), 3-Mercaptopropyltrimethoxysilan (Dynasylan® MTMO, Evonik), 3-Glycidyloxypropyltriethoxysilan (Dynasylan® GLYEO, Evonik) Glycidyloxypropyltrimethoxysilan (Dynasylan® GLYMO, Evonik), Phenyltrimethoxysilan (Dynasylan® 9165 oder Dynasylan® 9265, Evonik) oder oligomere Amino/Alkyl-Alkoxysilane wie z.B. Dynasylan® 1146 (Evonik), jeweils alleine oder in Mischung eingesetzt. Als Stabilisatoren können die dem Fachmann bekannten Produkte oder Produktkombinationen aus z.B. Tinuvin®-Stabilisatoren (Ciba), beispielsweise Tinuvin® 1130, Tinuvin® 292 oder auch Tinuvin® 400, vorteilhafterweise auch in Kombination, eingesetzt werden. Ihre Einsatzmenge richtet sich nach dem Grad der erforderlichen Stabilisierung. Zusätzlich können der Formulierung Covernetzer zur Steigerung von mechanischer Härte und Reduktion der Fließneigung beigemischt werden. Solche Covernetzer sind typischerweise Substanzen die in der Lage sind 3, 4, oder mehr vernetzungsfähige Gruppen zur Verfügung zu stellen. Beispiele im Kontext dieser Erfindung sind 3-Aminopropyltriethoxysilan, Tetramethoxysilan oder Tetraethoxysilan.

Als weitere Komponenten können die erfindungsgemäßen Zusammensetzungen vorzugsweise weitere zumeist monomere Silane, Hydroxylgruppen tragende Siloxane oder Lösungsmittel enthalten.

Als weitere Silane können dabei prinzipiell sämtliche Silane, bevorzugt mit hydrolysierbaren Alkoxygruppen, eingesetzt werden und insbesondere Amingruppen oder Vinylgruppen tragende Silane sowie diejenigen, die in der DE 10 2006 054155 oder der WO 2005/003201 beschrieben sind.

Als Monosilanol-bildende Verbindungen werden solche Verbindungen bezeichnet, welche exakt eine Silanolgruppe tragen, oder durch Reaktion mit Feuchtigkeit solche zu bilden vermögen. Als Beispiel für Silanol-Gruppen tragende Verbindungen sind folgende Strukturen zu nennen (CH₃)₃SiOH, (CH₃CH₂)₃SiOH, (CH₃CH₂CH₂)₃SiOH, (C₆H₁₀)₃SiOH, (C₆H₁₀)₂CH₃SiOH, R₃Si-O-SiR₂-OH (wobei R ein Kohlenwasserstoff, aber auch ein Siloxan sein kann), (C₆H₁₀)(CH₃CH₂)₂SiOH, (C₆H₁₀)₂CH₃CH₂SiOH. Bevorzugt sind Verbindungen vom Typ R₃Si-OH, in denen R für eine Methyl-, Ethyl-, Propyl-, Vinyl- oder Phenyl-Gruppe steht, wobei die Methyl-Gruppe besonders bevorzugt ist. Ebenso verwendbar sind alle mit OH-Gruppen reagierenden Chlorsilane und Chlorsiloxane, wie z.B. (CH₃)₃SiCl

Beispiele für Verbindungen, die in der Lage sind mit Feuchtigkeit Silanol-tragende Verbindungen zu bilden, sind (N,N-dimethylamino)triethylsilan, (N,N-dimethylamino)trimethylsilan N,O-bis(trimethylsilyl)acetamid, N,O-bis(triethylsilyl)acetamid N-(trimethylethylsilyl)acetamid, Bistrimethylsilylharnstoff, Hexamethyldisilazan, 1,1,3,3,-Tetramethyldisilazan, Trimethylsilylphenoxyd, Trimethylsilyl-alkoholat (wobei der Alkohol aus der Gruppe der C1-C10 Alkohole stammt) und Dimethylsilyldiethylamin, wobei die Verwendung von Hexamethyldisilazan besonders vorteilhaft ist.

Weiterhin können Verbindungen der Formel R₃Si-O-X eingesetzt werden, wobei X für Elemente aus der Gruppe der Halogene, aber auch für Kohlenwasserstoffe, die ein azides Wasserstoffatom enthalten, stehen kann. Diese Kohlenwasserstoffe mit azidem Wasserstoffatom können aus der Gruppe der Alkohole, bevorzugt sind Methanol, Ethanol, Propanol, Butanol, iso-Butanol, kommen, aber auch von Carbonsäuren abgeleitet sein, wie zum Beispiel Ameisensäure, Essigsäure, Propionsäure, Bernsteinsäure, Laurinsäure, Palminsäure, Stearinsäure, Acrylsäure, Methacrylsäure, Ölsäure, Linolsäure, Oxalsäure, Maleinsäure, Adipinsäure, Benzoesäure, Phthalsäure, Terephthalsäure, sowie die Anhydride dieser Säuren, da aus diesen durch Feuchtigkeitszutritt ebenfalls die Säure gebildet werden kann. Weiterhin kann R aus primären oder sekundären Aminen bestehen. Beispielhaft erwähnt seien hier Ammoniak, Methylamin, Dimethylamin, Ethylamin, Diethylamin, Propylamin, Dipropylamin, Butylamin, Phenylamin. Weitere Möglichkeiten sind Säureamide und Ketone.

Bei Verwendung des besonders bevorzugten Hexamethyldisilazans, aber auch bei Verwendung vieler anderer Silanol-bildender Verbindung ist es vorteilhaft, dass zu dem Reaktionsgemisch eine organische Säure aus der Gruppe der Carbonsäuren zugegeben wird, da dies die Ausbeute der Reaktion deutlich erhöht. Beispielhaft ist hier zu nennen; Ameisensäure, Essigsäure, Propionsäure, Bernsteinsäure, Laurinsäure, Palminsäure, Stearinsäure, Acrylsäure, Methacrylsäure, Ölsäure, Linolsäure, Oxalsäure, Maleinsäure, Adipinsäure, Benzoesäure, Phthalsäure, Terephthalsäure, wobei Essigsäure, Propionsäure, Maleinsäure und Ölsäure bevorzugt sind. Bei Verwendung von HMDS zusammen mit der hier katalytisch wirkenden Carbonsäure findet keine Konkurrenzreaktion der Carbonsäure mit dem HMDS um die zu verkappende OH-Funktion statt. Die Säuren reagieren hier bevorzugt mit dem Stickstoff des HMDS. Besonders bevorzugt ist die Ölsäure, da sie unter den Reaktionsbedingungen wenig flüchtig ist, kaum Verfärbungen verursacht und ohne unangenehmen Geruch ist. Zusätzlich oder alternativ kann auch durch Einsatz einer Stickstoffbase wie Triethylamin, Pyridin, Aminopyridin oder Imidazol eine Katalyse der Reaktion erreicht werden.

Als Katalysatoren für die Vernetzung oder Polymerisation der erfindungsgemäßen Zusammensetzungen oder deren chemische Fixierung auf Partikel- oder makroskopischen Oberflächen können die bekannten Polyurethanisierungs-, Allophanatisierungs- oder Biuretisierungskatalysatoren verwendet werden, die dem Fachmann an sich bekannt sind, bzw. die literaturbekannten und üblicherweise zur Hydrolyse und Kondensation von Alkoxysilanen eingesetzten Katalysatoren. Hierzu zählen Verbindungen, wie beispielsweise die üblicherweise verwendeten organischen Zinnverbindungen, wie z.B. Dibutylzinndilaurat, Dioctylzinndilaurat, Dibutylzinndiacetylacetonat, Dibutylzinndiacetat, Dibutylzinndioctoat, oder Dioctylzinndiacetylacetonat. Des Weiteren können auch Zinksalze, wie Zinkoctoat, Zinkacetylacetonat und Zink-2-ethylcaproat, oder Tetraalkylammoniumverbindungen, wie N, N, N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Des Weiteren können auch Wismutkatalysatoren, z.B. Borchi®-Katalysatoren, Titanate, z.B. Titan(IV)isopropylat, Eisen(III)-Verbindungen, z.B. Eisen(III)-acetylaceto-nat, Aluminiumverbindungen, wie Aluminiumtriisopropylat, Aluminiumtri-sec-butylat und andere Alkoholate sowie Aluminiumacetylacetonat, Calciumverbindungen, wie Calciumdinatriumethylendiamintetraacetat oder Caliumdiacetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenylamin, N-Ethylmorpholin etc., eingesetzt werden. Auch organische oder anorganische Brönstedsäuren wie Essigsäure, Trifluoressigsäure, Methansulfonsäure, p-Toluolsulfonsäure oder Benzoylchlorid, Salzsäure, Phosphorsäure deren Mono- und/oder Diester, wie z.B. Butylphosphat, (Iso-)Propylphosphat, Dibutylphosphat etc., sind als Katalysatoren geeignet. Selbstverständlich können auch Kombinationen mehrerer Katalysatoren eingesetzt werden.

Die erfindungsgemäßen Zusammensetzungen können auch sogenannte photolatente Basen als Katalysatoren enthalten, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen. Der Inhalt der Beschreibung und der Ansprüche WO 2005/100482 wird hiermit als Bestandteil dieser Offenbarung eingeführt.

Der Katalysator bzw. die photolatente Base wird in Mengen von 0,001 bis 5,0 Gew.-%, bevorzugt 0,01 bis 1,0 Gew.-% und besonders bevorzugt 0,05 bis 0,9 Gew.-% bezogen auf die Massensumme der Reaktionskomponenten eingesetzt. Der Katalysator bzw. die photolatente Base kann in einer Portion oder aber auch portionsweise oder auch kontinuierlich zugegeben werden. Bevorzugt ist Zugabe der gesamten Menge in einer Portion.

Die erfindungsgemäßen Zusammensetzungen sind bevorzugt zur Verklebung und/oder Abdichtung von partikulären oder flächigen Substraten geeignet. Eine weitere Einsatzmöglichkeit ist die Verwendung in der Bauindustrie oder im Fahrzeugbau, zur Abdichtung und Verklebung von Konstruktionselementen und Bauteilen, sowie zur Beschichtung von porösen oder nicht-porösen, partikulären oder flächigen Substrat geeignet. Die in dieser Erfindung verwendeten Alkoxylierungsprodukte können als Basis einer härtbaren Zusammensetzung hervorragend zur Beschichtung und Modifikation von Oberflächen und Fasern verwendet werden. Als weitere Beispiele sollen hier die Anwendungen auf Metallen, hier vor allem die Konstruktionswerkstoffe wie Eisen, Stahl, Edelstahl und Gusseisen, Eisenwerkstoffen, Aluminium, mineralischen Substraten, wie Stein, Estrich, Mörtel und Beton, Keramiken, Gläsern, keramischen Materialien, vor allem basierend auf festen Metall- oder Nichtmetalloxiden oder Carbiden, Aluminiumoxid, Magnesiumoxid oder Calciumoxid, sowie mineralische Substrate oder organische Substrate, Polyester, glasfaserverstärktem Polyester, Polyamid, Textilien und Gewebe aus Baumwolle und Polyester, Kork und/oder Holz genannt werden. Ebenso kann die Zusammensetzung zur Bindung, Verstärkung und Nivellierung von unebenen, porösen oder brüchigen Substraten, wie z.B. mineralischen Untergründen, Span- und Faserplatten aus Holz oder Kork, Verbundwerkstoffe wie beispielsweise Holzverbundstoffe wie MDF-Platten (mitteldichte Faserplatten), WPC-Artikel (Wood Plastic Composites), Spanplatten, Korkartikel, laminierte Artikel, Keramiken, aber auch Naturfasern und Kunstfasern genutzt werden.
Durch dieses breite Haftungsspektrum sind sie auch für die Verklebung von Materialkombinationen aus den genannten Substraten geeignet. Hierbei ist es nicht ausschlaggebend, ob die Oberflächen glatt oder angeraut oder porös sind. Angeraute oder poröse Oberflächen sind aufgrund der größeren Kontaktfläche zum Klebstoff zu bevorzugen.

Damit können die Alkoxylierungsprodukte beispielsweise als Grundstoffe für die Herstellung von Klebstoffen, als reaktive Vernetzer, als Haftvermittler und Primer sowie Bindemittel für Metalle, Glas und Glasfasern/Glasgewebe, Holz, Holzwerkstoffen, Naturfasern, zur Ausrüstung und Behandlung von gegebenenfalls textilen Flächengebilden und Fasern aus natürlichen und/oder synthetischen sowie mineralischen Rohstoffen sowie beispielsweise auch Kork, Leder, Papier, Tissue, silikatischen und oxidischen Materialien dienen.

Zur beispielhaften Darstellung der Erfindung werden im Folgenden Ausführungsbeispiele genannt, welche beispielhaft für die Formulierung der hergestellten Produkte und der durch das erfindungsgemäße Verfahren Bandbreite an in einer Formulierung erzielbaren Eigenschaften stehen.
Soweit nicht explizit gekennzeichnet sind alle Angaben zu relativen Anteilen (Anteilen in %) in Gewichtsprozent angegeben.

### Beispiele:

### 1. Allgemeine Methoden und Materialien

| | | |
|---|---|---|
| Diisononylphthalat | Vestinol 9 (DINP) | Evonik Industries AG, Essen |
| gefälltes Kalziumcarbonat | Socal U1S2 | Solvay Chemicals GmbH, Rheinberg |
| Titandioxid | Kronos 2310 | Kronos Titan GmbH, Leverkusen |
| | Dynasylan VTMO | Evonik Industries AG, Essen |
| | Dynasylan AMMO | Evonik Industries AG, Essen |
| | Irganox | BASF |
| | Tinuvin 292 | BASF |
| | Tinuvin 1130 | BASF |
| Dioctyl-Zinn-Diketonat | TIB KAT 223 | TIB Chemicals, Deutschland |
| | TIB KAT 722 | TIB Chemicals,. Deutschland |
| | Aerosil R202 | Evonik Industries AG, Essen |
| | Dynasylan 1146 | Evonik Industries AG, Essen |
| 3-Glycidyloxypropyltriethoxysilan | GLYEO | Evonik Industries AG, Essen |
| Propylenoxid | PO | |
| Polypropylenoxid | Desmophen | Bayer Material Science |
| | 2061.BD (PPG (2000 g/mol)) | |
| Polypropylenoxid | Acclaim 4200 (PPG (4000 | Bayer Material Science |
| | g/mol)) | |
| Isophorondiisocyanat | Vestanat IPDI | Evonik Industries AG, Essen |
| n-Butylisocyanat | | Lanxess |

### 2. Synthesebeispiele:

Es wurden folgende Alkoxysilylgruppen enthaltende Polyether eingesetzt, die gemäß dem in EP 2093244 dargelegten Verfahrensprinzip der DMC-katalysierten Alkoxylierung von 3-Glycidyloxypropyltriethoxysilan (GLYEO) mit Propylenoxid (PO) hergestellt wurden:

### Silylpolyether SP-1:

Polypropylenglygol-gestarteter, fast farbloser Polyether der mittleren Molmasse Mw von ca. 14000 g/mol und vierfacher Triethoxysilanfunktionalität.

Chemischer Aufbau gemäß Monomerendosage:
PPG(2000 g/mol) + 68 mol PO + eine Mischung aus 4 mol GLYEO und 119 mol PO

### Silylpolyether SP-2:

Polypropylenglygol-gestarteter, fast farbloser Polyether der mittleren Molmasse Mw von ca. 14000 g/mol und zweifacher Triethoxysilanfunktionalität.

Chemischer Aufbau gemäß Monomerendosage:
PPG(2000 g/mol) + 18 mol PO + eine Mischung aus 2 mol GLYEO und 180 mol PO

### Beispielhafte Arbeitsvorschrift 1:

850 g Silylpolyether SP-1 wurden vorgelegt, auf 60 °C geheizt und mit 27,0 g IPDI versetzt. Anschließend wurde 0,9 g TIB KAT 722 zugesetzt. Das Gemisch wurde 45 Minuten lang gerührt. Danach wurden 46,6 g eines Polyethers (A) der allgemeinen Formel C₄H₉O[CH₂CH(CH₃)O]_{5,3}H zugesetzt und das Reaktionsgemisch für weitere drei Stunden bei 80°C gerührt.

Es wurde ein klares, farbloses Produkte mit einer Viskosität von 48,9 Pa*s erhalten.

### Beispielhafte Arbeitsvorschrift 2:

850 g Silylpolyether SP-1 wurden vorgelegt, auf 60 °C geheizt und mit 27,0 g IPDI versetzt. Anschließend wurde 0,07 g TIB KAT® 216 zugesetzt. Das Gemisch wurde 45 Minuten lang gerührt und danach auf 70 °C aufgeheizt. Danach wurden 46,6 g eines Polyethers (A) der allgemeinen Formel C₄H₉O[CH₂CH(CH₃)O]_{5,3}H zugesetzt und das Reaktionsgemisch für weitere drei Stunden bei 70°C gerührt. Anschließend wurden weitere 0,02 g TIB KAT® 216 in 2 gleich großen Portionen innerhalb von 30 min zugegeben und weitere drei Stunden bei 70°C gerührt.

Es wurde ein klares, farbloses Produkte mit einer Viskosität von 85 Pa*s erhalten.

### Beispielhafte Arbeitsvorschrift 3:

850 g Silylpolyether SP-1 wurden vorgelegt, auf 70 °C geheizt und mit 27,0 g IPDI versetzt. Die Temperatur wurde während der gesamten Reaktion konstant bei etwa 70°C gehalten. Es wurden 0,9 g TIB KAT 722 zugesetzt. Das Gemisch wurde 45 Minuten lang gerührt. Danach wurden 46,6 g eines Polyethers (A) der allgemeinen Formel C₄H₉O[CH₂CH(CH₃)O]_{5,3}H zugesetzt und das Reaktionsgemisch für weitere drei Stunden gerührt.

Es wurde ein klares, farbloses Produkte mit einer Viskosität von 58 Pa*s erhalten.

Gemäß der beispielhaften Arbeitsvorschrift 1 wurden die weiteren Synthesen unter identischen Bedingungen mit den in Tabelle 1 aufgezeigten Mengen durchgeführt. Alle Produkte der Beispiele 1 bis 6 waren klar und farblos.

**Tabelle 1: Synthesebeispiele**

| Beispiel | Arbeitsvorschrift | Silylpolyether | Einwaage Silylpolyether [g] | Einwaage IPDI [g] | Katalysator | Einwaage[ g] | Einwaage A [g] | Viskosität [Pa*s] |
|---|---|---|---|---|---|---|---|---|
| 1 | 1 | SP-1 | 850 | 27 g | TIB KAT 722 | 0,9 g | 46,6 g | 48,9 |
| 2 | 1 | SP-1 | 800 | 27,9 | TIB KAT 722 | 0,9 | 52,7 | 34,5 |
| 3 | 1 | SP-1 | 830 | 34,3 | TIB KAT 722 | 0,9 | 72,9 | 25,6 |
| 4 | 1 | SP-2 | 865 | 27,5 | TIB KAT 722 | 0,9 | 47,5 | 111 |
| 5 | 1 | SP-2 | 855 | 26,9 | TIB KAT 722 | 0,9 | 56,3 | 83,1 |
| 6 | 1 | SP-2 | 740 | 30,5 | TIB KAT 722 | 0,8 | 65,0 | 51,2 |
| 7 | 2 | SP-1 | 135 | 5,1 | TIB KAT 216 | 0,008 | 10,3 | 22,9 |
| 8 | 2 | SP-1 | 269 | 10,2 | TIB KAT 216 | 0,018 | 20,6 | 24,4 |
| 9 | 3 | SP-1 | 500 | 27,9 | TIB KAT 722 | 0,9 | 52,7 | 40,5 |

### Vergleichsbeispiel V1 :

2525 g Silylpolyether SP-1 wurden vorgelegt, auf 60 °C geheizt und mit 35,8 g n-Butylisocyanat versetzt. Anschließend wurde 2,56 g TIB KAT 722 der zugesetzt. Das Gemisch wurde 4 Stunden lang gerührt. Es wurde ein klares, farbloses Produkte mit einer Viskosität von 7-9 Pa*s erhalten.

### Vergleichsbeispiel V2 :

2555 g Silylpolyether SP-2 wurden vorgelegt, auf 65 °C geheizt und mit 36,2 g *n-*Butylisocyanat versetzt. Anschließend wurde 2,59 g TIB KAT 722 zugesetzt. Das Gemisch wurde 4 Stunden lang gerührt. Es wurde ein klares, farbloses Produkte mit einer Viskosität von 9-12 Pa*s erhalten.

### 3. Zusammensetzungen:

Je zwei Proben der Synthesebeispiele S1 bis S6, sowie den Vergleichsbeispielen V1 und V2 werden gemäß den Vorschriften zu Zubereitung ZA und ZB verarbeitet.

### Zubereitung ZA :

Alle Prozent-Angaben sind hier als Gewichtsteil an der Gesamtformulierung zu verstehen.

### Zusammensetzung:

Die Zusammensetzungen bestehen aus dem jeweiligen oben genannten erfindungsgemäßen Produkt zu 25,9 %, gefälltem Kalziumcarbonat zu 51,1%, Diisononylphthalat zu 18,1%, Titandioxid zu 0,5%, Dynasylan VTMO zu 1,1%, Dynasylan AMMO zu 1,4%, Irganox zu 0,3%, Tinuvin 292 und Tinuvin 1130 je zu 0,6% und TIB KAT 223 zu 0,4%.

Die Komponenten der genannten Formulierungen werden nach den dem Fachmann bekannten Methoden eingearbeitet, wobei besonderen Wert auf den Ausschluss von Feuchtigkeit und das Formulieren unter Vermeidung von Lufteinschlüssen gelegt werden muss.
Hier sein beispielhaft der Ablauf des Formulierens im Labormaßstab auf einem Mischer (Speedmixer DAC 600 FVZ (Hausschild)) genannt. Selbstverständlich ist auch das Formulieren dieser Zusammensetzung auf Mischern im Technikums- und Produktionsmaßstab möglich. Die Zugabereihenfolgen und Mischzeiten können je nach technischen Erfordernissen angepasst werden. Der im Folgenden beispielhaft genannte Ablauf stellt somit nur eine Möglichkeit der Herstellung der härtbaren Zusammensetzung dar.
Das erfindungsgemäße Produkt, gefälltes Kalziumcarbonat, Diisononylphthalat und Titandioxid werden in einem für das Mischaggregat geeigneten 400 ml PP-Becher eingewogen und mit einem Spatel grob vordispergiert. Anschließend wird das Gemisch im Speedmixer für 4 Minuten bei 2300 1/min vermischt. Nach Abkühlen der Masse unter 55°C werden die beiden Dynasylan Produkte (VTMO und AMMO) zugegeben und für 1 Minute bei 2300 1/min eingemischt. Anschließend werden Irganox und die beiden Tinuvin-Produkte (1130 und 292) eingewogen und für 1 Minute bei 2300 1/min untergemischt. Bevor der Katalysator zugegeben werden kann, sollte die Temperatur der Masse wieder unter 55°C sein, um eine problemlose Handhabung des Materials unter Laborbedingungen zu gewährleisten. Abschließend wird der TIB KAT 223 zugegeben und für 30 Sekunden bei 2300 1/min eingemischt. Die Zusammensetzung wird anschließend in eine Euro-Kartusche überführt und mit den zur Kartusche passenden Kolben und Verschlüssen verschlossen und diese mit der Zusammensetzung gefüllten Kartusche vor der weiteren Verwendung für mindestens 12 Stunden und höchstens 3 Tagen bei Raumtemperatur gelagert.

### Zubereitung ZB :

Die Zusammensetzungen bestehen aus dem jeweiligen erfindungsgemäßen Produkt gemäß Beispiel 1 zu 36,8 %, gefälltem Kalziumcarbonat zu 44,8%, Diisononylphthalat zu 11,0%, Titandioxid zu 0,4%, Aerosil R202 zu 3,5%, Dynasylan VTMO zu 1,0%, Dynasylan 1146 zu 1,7%, Irganox zu 0,5%, TIB KAT 223 zu 0,4%.

Die Komponenten der genannten Formulierungen werden nach den dem Fachmann bekannten Methoden eingearbeitet, wobei besonderen Wert auf den Ausschluss von Feuchtigkeit und das Formulieren unter Vermeidung von Lufteinschlüssen gelegt werden muss.
Hier sein beispielhaft der Ablauf des Formulierens im Labormaßstab auf einem Mischer (Speedmixer DAC 600 FVZ (Hausschild)) genannt. Selbstverständlich ist auch das Formulieren dieser Zusammensetzung auf Mischern im Technikums- und Produktionsmaßstab möglich. Die Zugabereihenfolgen und Mischzeiten können je nach technischen Erfordernissen angepasst werden. Der im Folgenden beispielhaft genannte Ablauf stellt somit nur eine Möglichkeit der Herstellung der härtbaren Zusammensetzung dar.
Das erfindungsgemäße Produkt, gefälltes Kalziumcarbonat, Diisononylphthalat und Titandioxid werden in einem für das Mischaggregat geeigneten 400 ml PP-Becher eingewogen und mit einem Spatel grob vordispergiert. Anschließend wird das Gemisch im Speedmixer für 4 Minuten bei 2300 1/min vermischt. Im nächsten Schritt wird das Aerosil R202 in den Becher eingewogen und untergemischt (2 Minuten, Mischergeschwindigkeit in dieser Zeit ansteigend von 800 1/min auf 2300 1/min). Nach Abkühlen der Masse unter 55°C werden die beiden Dynasylan Produkte (VTMO und 1146) zugegeben und für 1 Minute bei 2300 1/min eingemischt. Anschließend wird das Irganox eingewogen und für 1 Minute bei 2300 1/min untergemischt. Bevor der Katalysator zugegeben werden kann, sollte die Temperatur der Masse wieder kleiner als 55°C sein, um eine problemlose Handhabung des Materials unter Laborbedingungen zu gewährleisten. Abschließend wird der TIB KAT 223 zugegeben und für 30 Sekunden bei 2300 1/min eingemischt. Die Zusammensetzung wird anschließend in eine Euro-Kartusche überführt und mit den zur Kartusche passenden Kolben und Verschlüssen verschlossen und diese mit der Zusammensetzung gefüllten Kartusche vor der weiteren Verwendung für mindestens 12 Stunden und höchstens 3 Tagen bei Raumtemperatur gelagert.

### 4. Verwendungsbeispiele

### Bestimmung der Aushärtungsschicht:

Zur Bestimmung der Durchhärtungscharakteristik der Zubereitungen A und B werden aus der Kartusche je 2 Haufen mit einem Durchmesser und einer Höhe von wenigstens 3 cm auf eine feuchtigkeitsdichte Folie appliziert. Die Haufen sollten möglichst geschlossen sein und eine möglichst glatte Oberfläche aufweisen. Ideal ist eine runde Form des Haufens mit möglichst steil abfallenden Flanken.

Nach 24 Stunden bzw. 7 Tagen wird je ein Haufen von der Folie gelöst, der noch pastöse Teil entfernt und die Schichtdicke der gehärteten Zusammensetzung mittels Millimetermaß bestimmt.

**Tabelle 2: Dicke der Aushärtungsschichten gemäß Beispiel 4**

| | Härtung 24h Schichtdicke [mm] | Härtung 7Tage Schichtdicke [mm] |
|---|---|---|
| S1/ZA | 2 | 7 |
| S2/ZA | 2 | 6 |
| S3/ZA | 3 | 8 |
| S4/ZA | 3 | 12 |
| S5/ZA | 2 | 9 |
| S6/ZA | 2 | 7 |
| S1/ZB | 3 | 12 |
| S2/ZB | 3 | 12 |
| S3/ZB | 4 | 10 |
| S4/ZB | 0 | 11 |
| S5/ZB | 2 | 14 |
| S6/ZB | 2 | 12 |

Die Ergebnisse der Tabelle zeigen, dass alle Zubereitungen nach 7 Tagen ausreichend ausgehärtet sind.

### Prüfung von Zugstäben:

Die Zubereitungen A und B werden in einen Rakel mit einem Spaltmaß von 2mm eingebracht und auf eine Polyethylenfolie aufgerakelt. Nach dem Aushärten des aufgerakelten Felles, nach 7 Tagen bei 23°C und 50% relativer Luftfeuchte, werden aus diesem mit Hilfe einer Schneidform und einer Kniehebelpresse Zugstäbe nach DIN 53504-S2 ausgestanzt.

Die Dicke der nach DIN 53504-S2 gefertigten Zugstäbe wurde vor Beginn der Prüfung bei jedem Stab gemessen, um die wirksame Querschnittsfläche zu berücksichtigen. Die Zugstäbe wurden in ein Rollenspannzeug an einer Universalprüfmaschine (Fa. Schmidt) eingespannt und mit einer Zuggeschwindigkeit von 200 mm/min geprüft. Als Bruchspannung wird die beim Bruch des Zugstabs anliegende Spannung (Kraft je Fläche) verstanden. Als Bruchdehnung wird die beim Bruch des Zugstabs anliegende Probenverlängerung (Dehnung) in % der Ursprungslänge verstanden.

**Tabelle 3: Ergebnisse der Prüfung der Zugstäbe gemäß Beispiel 4**

| | Bruchspannung [MPa] | Bruchdehnung [%] |
|---|---|---|
| S1/ZA | 1,6 | 56 |
| S2/ZA | 1,7 | 67 |
| S3/ZA | 1,6 | 64 |
| S4/ZA | 1,7 | 189 |
| S5/ZA | 1,7 | 196 |
| S6/ZA | 1,4 | 170 |
| S1/ZB | 2,1 | 39 |
| S2/ZB | 1,8 | 36 |
| S3/ZB | 1,7 | 36 |
| S4/ZB | 1,9 | 105 |
| S5/ZB | 2,0 | 126 |
| S6/ZB | 1,8 | 121 |
| V1/ZB | 1,2 | 53 |
| V2/ZA | 0,6 | 196 |

Die Ergebnisse der Tabelle 3 zeigen dass die erfindungsgemäßen Zusammensetzungen nach Aushärtung zu Produkten verwendet werden können, die eine gegenüber dem Stand der Technik deutlich verbesserte Bruchspannung verfügen. Die Bruchdehnung ist hierbei über einen weiten Bereich einstellbar in Abhängigkeit von den verwendeten erfindungsgemäßen Verbindungen und den angefertigten Zusammensetzungen.

### Prüfung von Verklebungen:

### Zugscherverklebungen

Die Zubereitungen A und B werden direkt von der Kartusche auf die zu verklebenden gleichartigen Materialien aufgebracht. Verwendet wurden je 2 Edelstahlsubstrate der Stahlsorte 1.4301 (Bezeichnung laut Stahlschlüssel), der Kunststoff ABS und als Holzsubstrat Buche (alle Prüfkörper wurden von der Firma Rocholl bezogen). Die verklebte Fläche betrug in allen Fällen 500 mm², die Schichtdicke der Verklebung betrug in allen Fällen mehr als 0,5 mm und weniger als 2,0 mm.

Die Zugscherverklebungen wurden nach der Aushärtung bei Normklima (23°C und 50% relative Luftfeuchte) in ein Backenspannzeug einer Universalprüfmaschine eingespannt und mit 10 mm/min bis zum Bruch gezogen. In Tabelle 4 werden die an der Probe anliegende Spannung beim Bruch der Verklebung aufgeführt.

**Tabelle 4: Prüfung der Zugscherverklebungen gemäß Beispiel 4**

| | V2A-Verklebung Bruchspannung [MPa] | ABS-Verklebung Bruchspannung [MPa] | Buchen-Verklebung Bruchspannung [MPa] |
|---|---|---|---|
| S1/ZA | 1,9 | 0,3 | 1,7 |
| S2/ZA | 1,8 | 0,3 | 1,6 |
| S3/ZA | 1,6 | 0,3 | 1,7 |
| S4/ZA | 1,6 | 0,2 | 1,7 |
| S5/ZA | 1,4 | 0,2 | 1,3 |
| S6/ZA | 1,3 | 0,2 | 1,2 |
| S1/ZB | 2,2 | 0,3 | 2,2 |
| S2/ZB | 2,0 | 0,3 | 2,1 |
| S3/ZB | 1,8 | 0,3 | 2,0 |
| S4/ZB | 1,8 | 0,3 | 1,6 |
| S5/ZB | 1,7 | 0,3 | 1,7 |
| S6/ZB | 1,6 | 0,4 | 1,7 |
| V1/ZB | 1,5 | 0,2 | 1,6 |
| V2/ZA | 0,9 | 0,2 | 1,0 |

Die Ergebnisse der Tabelle 4 zeigen, dass die Bruchspannungen der Verklebungen unter Anwendung der erfindungsgemäßen Zusammensetzungen mindestens ebenso hoch sind wie die der Vergleichszusammensetzungen.

## Patentansprüche

1. Alkoxylierungsprodukte, die die Strukturelemente der Formel (I) enthalten
Mᵢ Dⱼ Tₖ Qₗ URᵤ APᵥ Formel (I)
wobei M, D, T, Q nicht untereinander, sondern über die Gruppen UR und/oder AP miteinander verknüpft sind, und die Gruppen UR und AP nicht untereinander verknüpft sind
i = 2 bis 12,
j = 1,2 bis 8,
k = 0 bis 4,
l = 0 bis 3,
j + k ist größer gleich 2,
u = 2 bis 15,
v = 0 bis 4,
M unabhängig voneinander ein Sauerstoffradikal tragender Kohlenwasserstoffrest mit einer minimalen numerischen Molmasse von 88 g/mol der Formel (la) 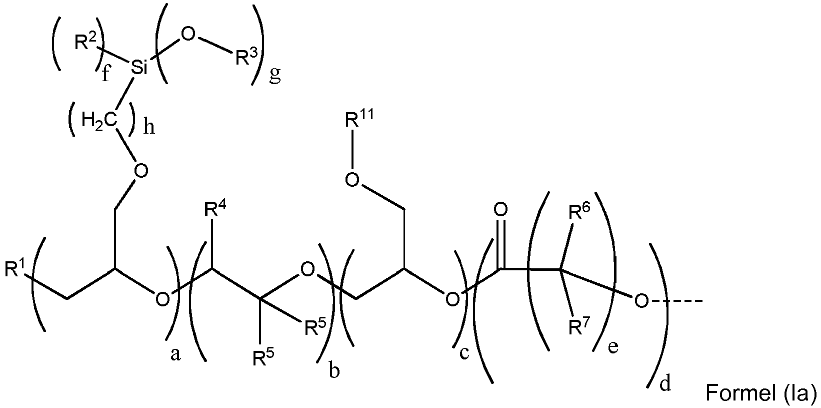
ist,
wobei R¹ = unabhängig voneinander ein gesättigter oder ungesättigter, linearer oder verzweigter organischer Kohlenwasserstoffrest ist, der als Heteroatome O, S und / oder N enthalten kann,
R² = unabhängig voneinander eine Alkylgruppe mit 1 bis 8 Kohlenstoffatomen,
R³ = unabhängig voneinander eine Alkylgruppe mit 1 bis 8 Kohlenstoffatomen,
R⁴ = unabhängig voneinander ein Wasserstoffradikal oder eine Alkylgruppe mit 1 bis 8 Kohlenstoffatomen,
R⁵ = unabhängig voneinander ein Wasserstoffradikal, eine Alkylgruppe mit 1 bis 20 Kohlenstoffatomen, eine Aryl- oder Alkarylgruppe,
oder R⁴ und einer der Reste R⁵ können gemeinsam einen Ring bilden, der die Atome an die R⁴ und R⁵ gebunden sind einschließt,
R⁶ und R⁷ = unabhängig voneinander gleich R⁵ und/oder Alkoxy,
R¹¹ = unabhängig voneinander eine gesättigte oder ungesättigte Alkylgruppe mit 1 bis 24 Kohlenstoffatomen, deren Kette durch Sauerstoff unterbrochen sein kann und weiter funktionelle Gruppen tragen kann wie z.B. Carboxylgruppen ggf mit Alkoholen wie z.B. Methanol, Ethanol, Propanol, Butanol oder Hexanol verestert, Hydroxygruppen ggf. mit Säuren wie Essigsäure, Buttersäure oder (Meth)Acrylsäure bzw. den Polymerisatien der (Meth)Acrylsäure verestert, oder eine Arylgruppe mit 6 bis 20 Kohlenstoffatomen, oder eine Alkarylgruppe mit 7 bis 20 Kohlenstoffatomen;
a = 0 bis 1000 ist, mit der Maßgabe, dass die Summe der Indices a aus Formel (la) und Formel (II) gleich oder größer 1 sein muss,
b = 1 bis 1000,
c = 0 bis 1000,
d = 0 bis 1000,
mit der Maßgabe, dass die Gruppen mit den Indices a, b, c und d frei permutierbar über die Molekülkette sind,
e = 1 bis 10,
g + f = 3 und g mindestens gleich 1 ist,
h = 0 bis 10
und mit der Maßgabe, dass die verschiedenen Monomereinheiten sowohl der Fragmente mit den Indices a, b, c, und d als auch der Polyoxyalkylenkette des Substituenten R¹ untereinander blockweise aufgebaut sein können oder aber einer statistischen Verteilung unterliegen und zudem untereinander frei permutierbar sind,
D unabhängig voneinander ein Polyetherrest PE mit t gleich 2 ist,
T unabhängig voneinander ein Polyetherrest PE mit t gleich 3 ist,
Q unabhängig voneinander ein Polyetherrest PE mit t gleich 4 ist,
UR ein divalenter Rest der Form -U-D^{C}-U- ist, wobei U eine -C(O)-NH-Gruppe ist, die über den Stickstoff an D^{C} gebunden ist, wobei D^{C} ein divalenter Kohlenwasserstoffrest ist,
PE ein Polyetherrest der Formel -(D^{A})ₜ-D^{X},
wobei t = 2 bis 4, und
D^{X} ein t-valenter funktioneller, gesättigter oder ungesättigter, linearer oder verzweigter organischer Kohlenwasserstoffrest ist, der als Heteroatome O, S, Si und / oder N enthalten kann,
und wobei D^{A} ein Fragment der Formel (II) 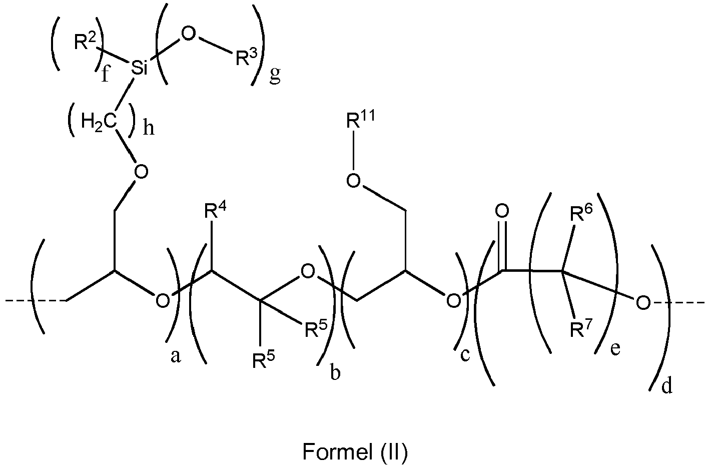 ist,
wobei
R² = unabhängig voneinander eine Alkylgruppe mit 1 bis 8 Kohlenstoffatomen sein kann,
R³ = unabhängig voneinander eine Alkylgruppe mit 1 bis 8 Kohlenstoffatomen,
R⁴ = unabhängig voneinander ein Wasserstoffradikal oder eine Alkylgruppe mit 1 bis 8 Kohlenstoffatomen,
R⁵ = unabhängig voneinander unabhängig voneinander ein Wasserstoffradikal, eine Alkylgruppe mit 1 bis 20 Kohlenstoffatomen, eine Aryl- oder Alkarylgruppe,
oder R⁴ und einer der Reste R⁵ können gemeinsam einen Ring bilden, der die Atome an die R⁴ und R⁵ gebunden sind einschließt,
R⁶ und R⁷ = unabhängig voneinander gleich R⁵ und/oder Alkoxy,
R¹¹ = unabhängig voneinander eine gesättigte oder ungesättigte Alkylgruppe mit 1 bis 24 Kohlenstoffatomen, deren Kette durch Sauerstoff unterbrochen sein kann und weiter funktionelle Gruppen tragen kann wie z.B. Carboxylgruppen ggf mit Alkoholen wie z.B. Methanol, Ethanol, Propanol, Butanol oder Hexanol verestert, Hydroxygruppen ggf. mit Säuren wie Essigsäure, Buttersäure oder (Meth)Acrylsäure bzw. den Polymerisatien der (Meth)Acrylsäure verestert, oder
eine Arylgruppe mit 6 bis 20 Kohlenstoffatomen, oder eine Alkarylgruppe mit 7 bis 20 Kohlenstoffatomen;
a = 1 bis 100 ist, c
b = 0 bis 1000,
c = 0 bis 50,
d = 0 bis 100,
mit der Maßgabe, dass die Gruppen mit den Indices a, b, c und d frei permutierbar über die Molekülkette sind,
e = 1 bis 10,
g + f = 3 und g mindestens gleich 1 ist,
h = 0 bis 10,
und mit der Maßgabe, dass die verschiedenen Monomereinheiten sowohl der Fragmente mit den Indices a, b, c, und d als auch der Polyoxyalkylenkette des Substituenten R¹ untereinander blockweise aufgebaut sein können oder aber einer statistischen Verteilung unterliegen und zudem untereinander frei permutierbar sind,
AP sind unabhängig voneinander gleiche oder verschiedene Reste der allgemeinen Formel (IIIa) oder (IIIb) 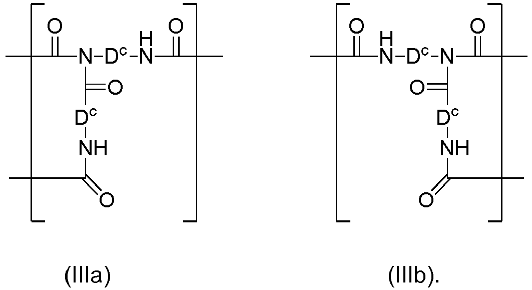
UR ist eine Urethanbrücke

2. Alkoxylierungsprodukte nach Anspruch 1 **dadurch gekennzeichnet, dass** in Formel (II) b = 1 bis 500 ist.

3. Alkoxylierungsprodukte zumindest einem der Ansprüche 1 oder 2 **dadurch gekennzeichnet, dass** k und l gleich null sind.

4. Alkoxylierungsprodukte nach zumindest einem der Ansprüche 1 bis 3 **dadurch gekennzeichnet, dass** M keine Alkoxysilyl- und/oder Alkylsilylgruppen aufweist.

5. Alkoxylierungsprodukte nach zumindest einem der Ansprüche 1 bis 4 **dadurch gekennzeichnet, dass** sie, bezogen auf das individuelle Molekül, im numerischen Mittel mehr als eine Alkoxysilylgruppe pro Gruppe UR aufweisen.

6. Verfahren zur Herstellung von Alkoxylierungsprodukten gemäß Anspruch 1, **dadurch gekennzeichnet, dass** in einem ersten Umsetzungsschritt (a) Polyether der Formel PE mit Diisocyanaten umgesetzt werden und in einem zweiten Umsetzungsschritt (b) das Produkt des ersten Umsetzungsschrittes (a) mit einem Molekül der Formel H-M umgesetzt werden, mit PE und M wie in Anspruch 1 definiert.

7. Verfahren nach Anspruch 6 **dadurch gekennzeichnet, dass** die Disocyanate im molaren Überschuss gegenüber den Polyethern PE eingesetzt werden.

8. Verfahren nach zumindest einem der Ansprüche 6 oder 7 **dadurch gekennzeichnet, dass** die Polyether PE so gewählt werden, dass im Produkt mehr Alkoxysilylgruppen als Guppen UR enthalten sind.

9. Verfahren nach zumindest einem der Ansprüche 6 bis 8 **dadurch gekennzeichnet, dass** nach dem ersten Umsetzungsschritt (a) und/oder nach dem zweiten Umsetzungsschritt (b) mindestens eine weitere Komponenten ausgewählt aus Katalysatoren, Polyethern PE, Diisocyanaten und/oder Molekülen der Formel H-M zugegeben wird.

10. Zusammensetzungen enthaltend die Alkoxylierungsprodukte nach zumindest einem der Ansprüche 1 bis 5 oder/und die Produkte des Verfahrens nach zumindest einem der Ansprüche 6 bis 9.

11. Zusammensetzung nach Anspruch 10 **dadurch gekennzeichnet, dass** sie zumindest einen Härtungskatalysator enthalten.

12. Zusammensetzung nach zumindest einem der Ansprüche 10 oder 11 **dadurch gekennzeichnet, dass** die Alkoxylierungsprodukte in Form einer Lösung, Emulsion, Dispersion oder Suspension vorliegen.

13. Zusammensetzung nach zumindest einem der Ansprüche 10 bis 12 enthaltend mindestens einen weiteren Zusatzstoff ausgewählt aus der Gruppe der Verdünner, Katalysatoren, Weichmacher, Füllstoffe, Lösungsmittel, Emulgatoren, Haftvermittler, Rheologieadditive, Additive zur chemischen Trocknung, und/oder Stabilisatoren gegen thermische und/oder chemische Belastungen und/oder Belastungen durch ultraviolettes und sichtbares Licht, Thixotropiermittel, Flammschutzmittel, Treibmittel oder Entschäumer, Entlüfter, filmbildende Polymere, antimikrobielle und konservierende Stoffe, Antioxidantien, Farbstoffe, Färbemittel und Pigmente, Frostschutzmittel, Fungizide, Reaktivverdünner Komplexbildner, Netzmittel, co-Vernetzer, Sprühhilfsmittel, Vitamine, Wuchsstoffe, Hormone, pharmakologische Wirkstoffe, Duftstoffe, Radikalfänger und/oder andere Zuschlagstoffe.

14. Verwendung der Alkoxylierungsprodukte, der Verfahrensprodukte und/oder der Zusammensetzungen nach zumindest einem der Ansprüche 1 bis 13 als oder zur Herstellung von Klebstoff- oder Dichtstoffmassen oder Beschichtungsmittel, Formkörper, Flüssigpasten, Pulverlackhärter, Partikel, Gewebe oder Verbundwerkstoffen.

15. Verwendung gemäß Anspruch 14 zur Abdichtung und/oder Verklebung und/oder Verschäumung und/oder zur Beschichtung von porösen oder nicht-porösen, partikulären oder flächigen Substraten ausgewählt aus der Gruppe umfassend Konstruktionselemente, Bauteile, Metalle und Konstruktionswerkstoffe, Eisen, Stahl, Edelstahl und Gusseisen, keramische Materialien enthaltend feste Metall- oder Nichtmetalloxide oder Carbide, Aluminiumoxid, Magnesiumoxid oder Calciumoxid, sowie mineralische Substrate, organische Substrate, Verbundwerkstoffe, Holzverbundstoffe, Kork, Span- und Faserplatten aus Holz oder Kork, MDF-Platten, WPC-Artikel, Korkartikel, laminierte Artikel, Keramiken, Naturfasern, Kunstfasern und/oder Holz.

## Claims

1. Alkoxylation products which comprise structural elements of the formula (I)
Mᵢ Dⱼ Tₖ Qₗ URᵤ APᵥ formula (I)
wherein M, D, T and Q are linked not to one another but instead with one another via the groups UR and/or AP, and the groups UR and AP are not linked to one another,
i = 2 to 12,
j = 1.2 to 8,
k = 0 to 4,
1 = 0 to 3,
j + k is greater than or equal to 2,
u = 2 to 15,
v = 0 to 4,
M independently at each occurrence is a hydrocarbon radical which carries an oxygen radical and has a minimum numerical molar mass of 88 g/mol of the formula (Ia) 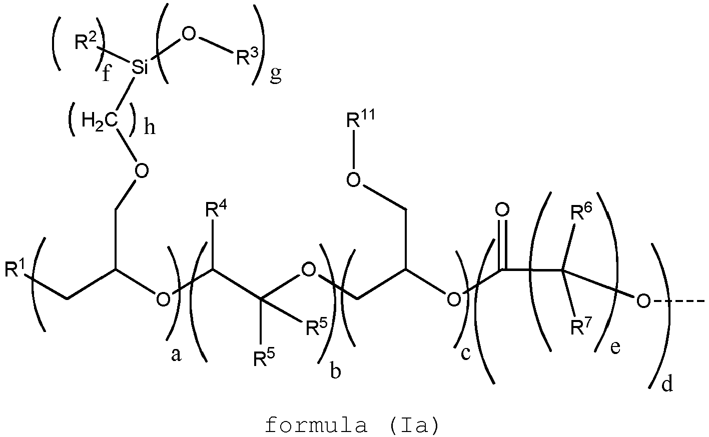
wherein R¹ = independently at each occurrence a saturated or unsaturated, linear or branched organic hydrocarbon residue which may contain O, S and/or N as heteroatoms,
R² = independently at each occurrence an alkyl group having 1 to 8 carbon atoms,
R³ = independently at each occurrence an alkyl group having 1 to 8 carbon atoms,
R⁴ = independently at each occurrence a hydrogen radical or an alkyl group having 1 to 8 carbon atoms,
R⁵ = independently at each occurrence a hydrogen radical, an alkyl group having 1 to 20 carbon atoms or an aryl or alkaryl group,
or R⁴ and one of the radicals R⁵ may together form a ring which includes the atoms to which R⁴ and R⁵ are bonded,
R⁶ and R⁷ = independently at each occurrence the same as R⁵ and/or alkoxy,
R¹¹ = independently at each occurrence a saturated or unsaturated alkyl group having 1 to 24 carbon atoms, whose chain may be interrupted by oxygen and may further carry functional groups, such as, for example, carboxyl groups, optionally esterified with alcohols such as, for example, methanol, ethanol, propanol, butanol or hexanol, hydroxyl groups optionally esterified with acids such as acetic acid, butyric acid or (meth)acrylic acid and/or the polymers of (meth) acrylic acid, or an aryl group having 6 to 20 carbon atoms, or an alkaryl group having 7 to 20 carbon atoms;
a = 0 to 1000, with the proviso that the sum of the indices a from formula (Ia) and formula (II) must be greater than or equal to 1,
b = 0 to 1000,
c = 0 to 1000,
d = 0 to 1000,
with the proviso that the groups having the indices a, b, c and d are freely permutable over the molecular chain,
e = 1 to 10,
g + f = 3 and g is at least 1,
h = 0 to 10,
and with the proviso that the different monomer units both of the fragments having the indices a, b, c and d and of the polyoxyalkylene chain of the substituent R¹ may be constructed in blocks with one another or else may be subject to a statistical distribution and, moreover, are freely permutable with one another,
D independently at each occurrence is a polyether radical PE where t is equal to 2,
T independently at each occurrence is a polyether radical PE where t is equal to 3,
Q independently at each occurrence is a polyether radical PE where t is equal to 4,
UR is a divalent radical of the form -U-D^{C}-U-, where U is a -C(O)-NH group which is bonded via the nitrogen to D^{C}, and D^{C} is a divalent hydrocarbon radical,
PE is a polyether residue of the formula - (D^{A})ₜ-D^{X}, where t = 2 to 4, and
D^{X} is a t-valent functional, saturated or unsaturated, linear or branched organic hydrocarbon residue which may contain O, S, Si and/or N as heteroatoms,
and where D^{A} is a fragment of the formula (II) 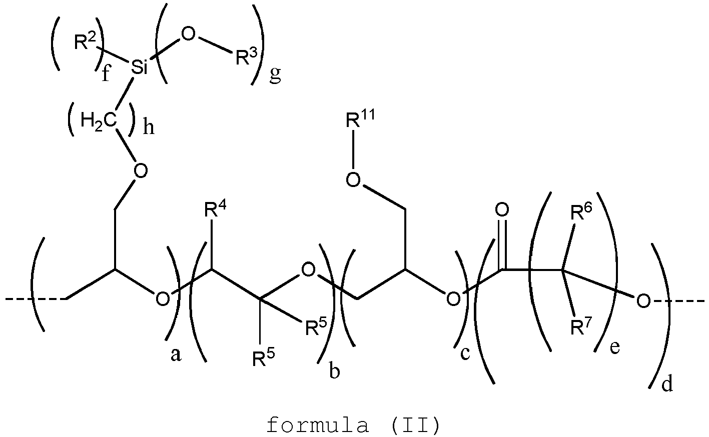
wherein
R² = independently at each occurrence can be an alkyl group having 1 to 8 carbon atoms,
R³ = independently at each occurrence an alkyl group having 1 to 8 carbon atoms,
R⁴ = independently at each occurrence a hydrogen radical or an alkyl group having 1 to 8 carbon atoms,
R⁵ = independently at each occurrence a hydrogen radical, an alkyl group having 1 to 20 carbon atoms or an aryl or alkaryl group,
or R⁴ and one of the radicals R⁵ may together form a ring which includes the atoms to which R⁴ and R⁵ are bonded,
R⁶ and R⁷ = independently at each occurrence the same as R⁵ and/or alkoxy,
R¹¹ = independently at each occurrence a saturated or unsaturated alkyl group having 1 to 24 carbon atoms, whose chain may be interrupted by oxygen and may further carry functional groups, such as, for example, carboxyl groups, optionally esterified with alcohols such as methanol, ethanol, propanol, butanol or hexanol, hydroxyl groups optionally esterified with acids such as acetic acid, butyric acid or (meth)acrylic acid and/or the polymers of (meth)acrylic acid, or an aryl group having 6 to 20 carbon atoms, or an alkaryl group having 7 to 20 carbon atoms;
a = 1 to 100, c
b = 0 to 1000,
c = 0 to 50,
d = 0 to 100,
with the proviso that the groups having the indices a, b, c and d are freely permutable over the molecular chain,
e = 1 to 10,
g + f = 3 and g is at least 1,
h = 0 to 10,
and with the proviso that the different monomer units both of the fragments having the indices a, b, c and d and of the polyoxyalkylene chain of the substituent R¹ may be constructed in blocks with one another or else may be subject to a statistical distribution and, moreover, are freely permutable with one another,
AP are, independently of one another, identical or different residues of the general formula (IIIA) or (IIIb) 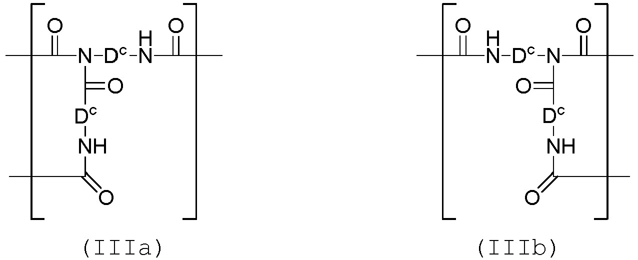
UR is a urethane bridge.

2. Alkoxylation products according to Claim 1, **characterized in that** in formula (II) b = 1 to 500.

3. Alkoxylation products according to at least one of Claims 1 and 2, **characterized in that** k and 1 are zero.

4. Alkoxylation products according to at least one of Claims 1 to 3, **characterized in that** M has no alkoxysilyl and/or alkylsilyl groups.

5. Alkoxylation products according to at least one of Claims 1 to 4, **characterized in that**, based on the individual molecule, they have on numerical average more than one alkoxysilyl group per group UR.

6. Process for preparing alkoxylation products according to Claim 1, **characterized in that** in a first reaction step (a) polyethers of the formula PE are reacted with diisocyanates and in a second reaction step (b) the product of the first reaction step (a) is reacted with a molecule of the formula H-M, with PE and M as defined in Claim 1.

7. Process according to Claim 6, **characterized in that** the diisocyanates are used in a molar excess over the polyethers PE.

8. Process according to at least one of Claims 6 and 7, **characterized in that** the polyethers PE are selected such that in the product there are more alkoxysilyl groups than groups UR.

9. Process according to at least one of Claims 6 to 8, **characterized in that** after the first reaction step (a) and/or after the second reaction step (b) at least one further component selected from catalysts, polyethers PE, diisocyanates and/or molecules of the formula H-M is added.

10. Compositions comprising the alkoxylation products according to at least one of Claims 1 to 5 and/or the products of the process according to at least one of Claims 6 to 9.

11. Composition according to Claim 10, **characterized in that** it comprises at least one curing catalyst.

12. Composition according to at least one of Claims 10 and 11, **characterized in that** the alkoxylation products are in the form of a solution, emulsion, dispersion or suspension.

13. Composition according to at least one of Claims 10 to 12, comprising at least one further adjuvant selected from the group of diluents, catalysts, plasticizers, fillers, solvents, emulsifiers, adhesion promoters, rheology additives, chemical drying additives, and/or stabilizers against thermal and/or chemical exposures and/or exposures to ultraviolet and visible light, thixotropic agents, flame retardants, blowing agents or defoamers, deaerating agents, film-forming polymers, antimicrobial and preservative substances, antioxidants, dyes, colourants and pigments, frost preventatives, fungicides, reactive diluents, complexing agents, wetting agents, co-crosslinkers, spraying assistants, vitamins, growth substances, hormones, active pharmacological ingredients, fragrances, radical scavengers and/or other adjuvants.

14. Use of the alkoxylation products, of the process products and/or of the compositions according to at least one of Claims 1 to 13 as or for producing adhesives or sealants or coating materials, shaped articles, liquid pastes, powder coating curing agents, particles, fabrics or composite materials.

15. Use according to Claim 14 for the sealing and/or bonding and/or foaming and/or for the coating of porous or non-porous, particulate or sheetlike substrates selected from the group encompassing construction elements, components, metals and construction materials, iron, steel, stainless steel and cast iron, ceramic materials comprising solid metal oxides or non-metal oxides or carbides, aluminium oxide, magnesium oxide or calcium oxide, and also mineral substrates, organic substrates, composite materials, wood composites, cork, chipboard and fibreboard panels made from wood or cork, MDF panels, WPC articles, cork articles, laminated articles, ceramics, natural fibres, synthetic fibres and/or wood.

## Revendications

1. Produits d'alcoxylation, qui contiennent les éléments de structure de formule (I)
MᵢDⱼTₖQₗURᵤAPᵥ Formule (I)
dans laquelle M, D, T, Q ne sont pas liés les uns aux autres, mais reliés via les groupes UR et/ou AP et les groupes UR et AP ne sont pas liés l'un à l'autre
i = 2 à 12,
j = 1, 2 à 8,
k = 0 à 4,
l = 0 à 3,
j + k est supérieur à 2,
u = 2 à 15,
v = 0 à 4,
M représente, indépendamment, un radical hydrocarboné portant un radical oxygène présentant une masse molaire numérique minimale de 88 g/mole de formule (Ia) 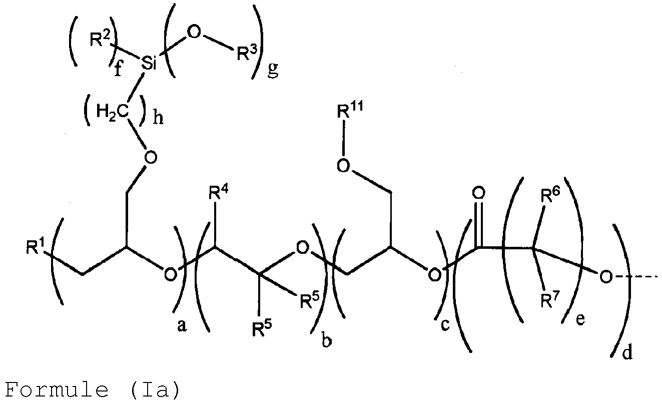
dans laquelle
R¹ = indépendamment, un radical hydrocarboné organique saturé ou insaturé, linéaire ou ramifié, qui peut contenir O, S et/ou N comme hétéroatomes,
R² = indépendamment, un groupe alkyle comprenant 1 à 8 atomes de carbone,
R³ = indépendamment, un groupe alkyle comprenant 1 à 8 atomes de carbone,
R⁴ = indépendamment, un radical hydrogène ou un groupe alkyle comprenant 1 à 8 atomes de carbone,
R⁵ = indépendamment, un radical hydrogène, un groupe alkyle comprenant 1 à 20 atomes de carbone, un groupe aryle ou un groupe alkaryle,
ou R⁴ et un des radicaux R⁵ peuvent former, ensemble, un cycle qui comprend les atomes auxquels R⁴ et R⁵ sont liés,
R⁶ et R⁷ = indépendamment l'un de l'autre, R⁵ et/ou alcoxy,
R¹¹ = indépendamment, un groupe alkyle saturé ou insaturé, comprenant 1 à 24 atomes de carbone, dont la chaîne peut être interrompue par oxygène et qui peut porter d'autres groupes fonctionnels tels que par exemple des groupes carboxyle, le cas échéant estérifiés avec des alcools tels que par exemple méthanol, éthanol, propanol, butanol ou hexanol, des groupes hydroxy, le cas échéant estérifiés avec des acides tels que l'acide acétique, l'acide butyrique ou l'acide (méth)acrylique ou les polymères de l'acide (méth)acrylique, ou un groupe aryle comprenant 6 à 20 atomes de carbone ou un groupe alkaryle comprenant 7 à 20 atomes de carbone ;
a = 0 à 1000, étant entendu que la somme des indices a de la formule (la) et de la formule (II) doit être égale ou supérieure à 1,
b = 1 à 1000,
c = 0 à 1000,
d = 0 à 1000,
étant entendu que les groupes présentant les indices a, b, c et d sont permutables librement via la chaîne moléculaire,
e = 1 à 10,
g + f = 3 et g vaut au moins 1,
h = 0 à 10
et étant entendu que les différentes unités monomères tant des fragments portant les indices a, b, c et d que de la chaîne polyalkylène du substituant R¹ peuvent être formées sous forme de blocs entre elles ou également se trouver avec une répartition statistique et sont en outre librement permutables entre elles,
D représente, indépendamment, un radical polyéther PE avec t = 2,
T représente, indépendamment, un radical polyéther PE avec t = 3,
Q représente, indépendamment, un radical polyéther PE avec t = 4,
UR représente un radical divalent de formule -U-D^{c}-U-, U représentant un groupe -C(O)-NH-, qui est lié via l'azote à D^{c}, D^{c} représentant un radical hydrocarboné divalent,
PE représente un radical polyéther de formule-(D^{A})ₜ-D^{X},
où t = 2 à 4, et
D^{X} représente un radical hydrocarboné organique t-valent, fonctionnel, saturé ou insaturé, linéaire ou ramifié, qui peut contenir O, S, Si et/ou N comme hétéroatomes et D^{A} représente un fragment de formule (II) 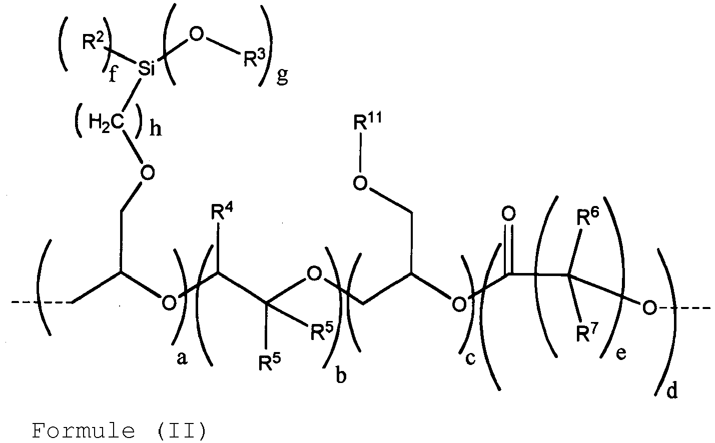
dans laquelle
R² = indépendamment, un groupe alkyle comprenant 1 à 8 atomes de carbone,
R³ = indépendamment, un groupe alkyle comprenant 1 à 8 atomes de carbone,
R⁴ = indépendamment, un radical hydrogène ou un groupe alkyle comprenant 1 à 8 atomes de carbone,
R⁵ = indépendamment, un radical hydrogène, un groupe alkyle comprenant 1 à 20 atomes de carbone, un groupe aryle ou un groupe alkaryle,
ou R⁴ et un des radicaux R⁵ peuvent former, ensemble, un cycle qui comprend les atomes auxquels R⁴ et R⁵ sont liés,
R⁶ et R⁷ = indépendamment l'un de l'autre, R⁵ et/ou alcoxy,
R¹¹ = indépendamment, un groupe alkyle saturé ou insaturé, comprenant 1 à 24 atomes de carbone, dont la chaîne peut être interrompue par oxygène et qui peut porter d'autres groupes fonctionnels tels que par exemple des groupes carboxyle, le cas échéant estérifiés avec des alcools tels que par exemple méthanol, éthanol, propanol, butanol ou hexanol, des groupes hydroxy, le cas échéant estérifiés avec des acides tels que l'acide acétique, l'acide butyrique ou l'acide (méth)acrylique ou les polymères de l'acide (méth)acrylique, ou un groupe aryle comprenant 6 à 20 atomes de carbone ou un groupe alkaryle comprenant 7 à 20 atomes de carbone ;
a = 1 à 100,
b = 0 à 1000,
c = 0 à 50,
d = 0 à 100,
étant entendu que les groupes présentant les indices a, b, c et d sont permutables librement via la chaîne moléculaire,
e = 1 à 10,
g + f = 3 et g vaut au moins 1,
h = 0 à 10,
et étant entendu que les différentes unités monomères tant des fragments portant les indices a, b, c et d que de la chaîne polyalkylène du substituant R¹ peuvent être formées sous forme de blocs entre elles ou également se trouver avec une répartition statistique et sont en outre librement permutables entre elles,
AP représente, indépendamment, des radicaux identiques ou différents de formule générale (IIIa) ou (IIIb) 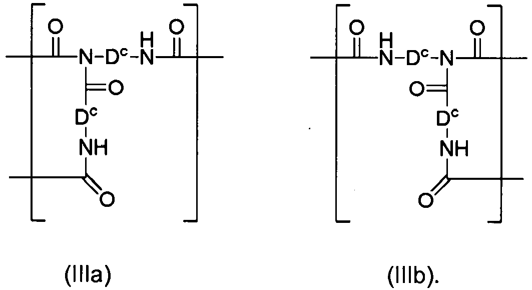
UR représente un pont uréthane.

2. Produits d'alcoxylation selon la revendication 1, **caractérisés en ce que**, dans la formule (II), b = 1 à 500.

3. Produits d'alcoxylation selon au moins l'une quelconque des revendications 1 ou 2, **caractérisés en ce que** k et l valent zéro.

4. Produits d'alcoxylation selon au moins l'une quelconque des revendications 1 à 3, **caractérisés en ce que** M ne présente pas de groupes alcoxysilyle et/ou alkylsilyle.

5. Produits d'alcoxylation selon au moins l'une quelconque des revendications 1 à 4, **caractérisés en ce qu'**ils présentent, par rapport à la molécule individuelle, en moyenne numérique plus d'un groupe alcoxysilyle par groupe UR.

6. Procédé pour la préparation de produits d'alcoxylation selon la revendication 1, **caractérisé en ce que**, dans une première étape de transformation (a), on transforme des polyéthers de formule PE avec des diisocyanates et, dans une deuxième étape de transformation (b), on transforme le produit de la première étape de transformation (a) avec une molécule de formule H-M, PE et M étant définis comme dans la revendication 1.

7. Procédé selon la revendication 6, **caractérisé en ce que** les diisocyanates sont utilisés en excès molaire par rapport aux polyéthers PE.

8. Procédé selon au moins l'une quelconque des revendications 6 ou 7, **caractérisé en ce que** les polyéthers PE sont choisis de manière telle que le produit contient plus de groupes alcoxysilyle que de groupes UR.

9. Procédé selon au moins l'une quelconque des revendications 6 à 8, **caractérisé en ce qu'**après la première étape de transformation (a) et/ou après la deuxième étape de transformation (b), on ajoute au moins un autre composant choisi parmi les catalyseurs, les polyéthers PE, les diisocyanates et/ou les molécules de formule H-M.

10. Compositions contenant les produits d'alcoxylation selon au moins l'une quelconque des revendications 1 à 5 et/ou les produits du procédé selon au moins l'une quelconque des revendications 6 à 9.

11. Composition selon la revendication 10, **caractérisée en ce qu'**elle contient au moins un catalyseur de durcissement.

12. Composition selon au moins l'une quelconque des revendications 10 ou 11, **caractérisée en ce que** les produits d'alcoxylation se trouvent sous forme d'une solution, d'une émulsion, d'une dispersion ou d'une suspension.

13. Composition selon au moins l'une quelconque des revendications 10 à 12 contenant au moins un autre additif, choisi dans le groupe formé par les diluants, les catalyseurs, les plastifiants, les charges, les solvants, les émulsifiants, les promoteurs d'adhérence, les additifs rhéologiques, les additifs pour le séchage chimique et/ou les stabilisants contre des sollicitations thermiques et/ou chimiques et/ou des sollicitations par une lumière ultraviolette et visible, les agents thixotropiques, les agents ignifuges, les agents gonflants ou les antimousses, les agents de désaération, les polymères filmogènes, les substances antimicrobiennes et les conservateurs, les antioxydants, les colorants, les teintures et les pigments, les agents antigel, les fongicides, les diluants réactifs, les complexants, les agents mouillants, les coréticulants, les adjuvants de pulvérisation, les vitamines, les substances de croissance, les hormones, les substances actives pharmacologiques, les parfums, les pièges des radicaux et/ou d'autres adjuvants.

14. Utilisation des produits d'alcoxylation, des produits de procédé et/ou des compositions selon au moins l'une quelconque des revendications 1 à 13 en tant que ou pour la préparation de masses adhésives ou d'étanchéité ou agents de revêtement, corps façonnés, pâtes liquides, durcisseurs de laque en poudre, particules, tissus ou matériaux composites.

15. Utilisation selon la revendication 14 pour l'étanchéification et/ou le collage et/ou le moussage et/ou pour le revêtement de substrats poreux ou non poreux, particulaires ou plats, choisis dans le groupe comprenant les éléments de construction, les pièces, les métaux et les matériaux de construction, le fer, l'acier, l'acier inoxydable et la fonte, les matériaux céramiques contenant des oxydes solides métalliques ou non métalliques ou des carbures, l'oxyde d'aluminium, l'oxyde de magnésium ou l'oxyde de calcium ainsi que les substrats minéraux, les substrats organiques, les matériaux composites, les matériaux composites à base de bois, le liège, les panneaux de copeaux et de fibres en bois ou en liège, les panneaux en MDF, les objets en composite bois-plastique, les objets en liège, les objets stratifiés, les céramiques, les fibres naturelles, les fibres synthétiques et/ou le bois.
